# EUROPEAN PATENT APPLICATION

(11) **EP 2 722 764 A1**
(43) Date of publication of application: **23.04.2014**
(21) Application number: 11867908.3
(22) Date of filing: 17.06.2011
(51) Int. Cl.: G06F 12/08, G06F 12/06

(54) **ARITHMETIC PROCESSING UNIT, INFORMATION PROCESSING DEVICE, AND ARITHMETIC PROCESSING UNIT CONTROL METHOD**

(71) Applicant: Fujitsu Limited, Kawasaki-shi, Kanagawa 211-8588 (JP)
(72) Inventor: HIKICHI, Toru, Kawasaki-shi Kanagawa 211-8588 (JP)
(74) Representative: Fenlon, Christine Lesley
(86) International application number: PCT/JP2011/063926
(87) International publication number: WO 2012/172683

(57) **Abstract**

An L2 cache control unit searches for a cache memory according to a memory access request which is provided from a request storage unit 0 through a CPU core unit, and retains in request storage units 1 and 2 the memory access request that has a cache mistake that has occurred. A bank abort generation unit counts, for each bank, the number of memory access requests to the main storage device, and instructs the L2 cache control unit to interrupt access when any of the number of counted memory access requests exceeds a specified value. According to the instruction, the L2 cache control unit interrupts the processing of the memory access request retained in the request storage unit 0. A main memory control unit issues the memory access request retained in the request storage unit 2 to the main storage device.

## Description

### FIELD

The present invention relates to an arithmetic processing unit, an information processing device, and a control method of an arithmetic processing unit.

### BACKGROUND

A CPU (Central Processing Unit) as an arithmetic processing unit is known, in which a cache memory is connected to a main storage device, and which has a mechanism for pipeline-processing a memory access request to the cache memory and the main storage device. Specifically, such an arithmetic processing unit is implemented in a computer system as an information processing device, as an L2 (Level-2: secondary) cache system, for example.

When a CPU core which is a command processing unit configured to process commands fails a load command, for example, and then an access to an L1 (Level-1: primary) cache memory fails, a new memory access request is issued in an L2 cache control unit and is received by a new request storage unit. A memory access request is provided to a pipeline of an L2 cache memory from the new request storage unit. When the memory access request provided to the pipeline makes a cache mistake at the L2 cache memory, the memory access request with the cache mistake is stored in a request storage unit 1 and further, in a request storage unit 2 in a system controller having a main storage control function. A memory access request is selected from the request storage unit 2 and is issued to a DRAM (Dynamic Random Access Memory) access processing unit and at the same time, the memory access request is opened from the request storage unit 2. In the DRAM access processing unit, accesses are made to the DRAM by pipeline processing. Data responses are performed from the DRAM through the system controller to the L2 cache control unit. The L2 cache control unit which received the data responses starts up a request response pipeline. When processing of the request response pipeline is completed, updates of a cache tag unit, data storages in a cache data unit, data responses to the CPU core which issued the memory access request (not a pre-fetch request, but a load request), and the like, are performed. Finally, the request storage unit 1 is opened.

In general, a main storage device constituted of a DRAM has a configuration of being divided into a specified number of memory banks (hereafter called "a bank"). And the main storage device has a feature wherein, when processing of a memory access request to one bank is commenced, the same bank cannot process a subsequent memory request for a certain period of time. Therefore, in the above configuration, when a certain memory access request is provided from a request storage unit 2 to a DRAM access processing unit, the same bank of the memory access request is excluded from being a selection target for being extracted from the request storage unit 2 for a certain period of time. Then, the processing is performed by selecting processable memory access requests of banks, in the order beginning from an old processable memory access request.

Therefore, in a system with a plurality of CPU cores implemented, for example, such a case may be considered in which load requests of data from a plurality of CPU cores to the same bank are consecutively generated. In such a case, when the L2 cache system makes a cache mistake, memory access requests to the same bank on the main storage device are concentrated, and this may cause a situation wherein a data transfer efficiency from the main storage device to the L2 cache memory and the CPU core is deteriorated.

To meet this challenge, such a technology is known that is capable of improving a memory access performance by decreasing memory access delays, even when a deviation occurs at the bank of a destination of the access request to a main storage device divided into a plurality of banks which are independently accessible and commonly shared by a plurality of processors. In this prior art, it is configured in the memory control device, providing priority determination delay stack circuits which correspond to priority determination circuits and access request stack circuits between the priority determination circuits corresponding to the memory bank and the access request stack circuits is configured in the memory control device. With this configuration, even when a deviation occurs in the memory bank at the destination of the access request, the request for access to the other subsequent memory bank is processed without being delayed. In addition, when there is an access request not stacked inside, the priority determination delay stack circuit is configured to directly send the input access request through the priority determination circuit to the storage device.

However, this prior art has the problem wherein the optimum access control is not realized as an entire system which includes the L2 cache control unit.

Patent Document 1: Japanese Laid-open Patent Publication No. 11-85605

### SUMMARY

The object of the present invention is to equalize accesses to memory banks by a system which includes a main storage device having a cache memory and a plurality of memory banks.

According to one aspect of the embodiments, an arithmetic processing unit connected to a storage device having a plurality of banks includes: a command processing unit configured to issue a memory access request; a cache memory configured to have a plurality of cache lines for retaining data; a first request retention unit configured to provide a memory access request issued by the command processing unit; a second request retention unit configured to retain a memory access request that has a cache mistake that has occurred; a cache control unit configured to search for the cache memory according to the memory access request provided from the first request retention unit and to retain the memory access request that has a cache mistake that has occurred in the second request retention unit; a third request retention unit configured to retain a memory access request with processing uninterrupted from among the memory access request retained in the second request retention unit; an access count unit configured to count, for each bank, the number of memory access requests to the storage device according to the memory access request retained in the second request retention unit and the third request retention unit, and when any of the number of memory access requests of the bank exceeds a specified value, to instruct the cache control unit to interrupt processing of the memory access request to the bank in which the number of memory access requests has exceeded the pretermined value retained in the first request retention unit; and a main memory control unit configured to issue the memory access request retained in the third request retention unit to the storage device.

In a configuration in which a cache control unit and a main storage device having a plurality of memory banks are connected, a request bank making a request to a cache control unit and a main storage unit is equalized, and accordingly, even when a deviation of a bank access is about to occur, issuance of excessive memory access requests in the same bank may be prevented. With this, an issuance state of the memory access requests may be kept regularly under a state in which a wide variety of memory access requests are stored in a pipeline of a cache control unit and a main storage control unit, and equalizing bank accesses for each memory bank may be realized.

### BRIEF DESCRIPTION OF DRAWINGS

FIG. 1A illustrates a general configuration (No. 1) of an information processing device having a mechanism for pipeline-processing a memory access request to an L2 cache memory and a main storage device.
FIG. 1B illustrates a general configuration (No. 2) of an information processing device having a mechanism for pipeline-processing a memory access request to an L2 cache memory and a main storage device.
FIG. 1C illustrates a general configuration (No. 3) of an information processing device having a mechanism for pipeline-processing a memory access request to an L2 cache memory and a main storage device.
FIG. 1D illustrates a general configuration (No. 4) of an information processing device having a mechanism for pipeline-processing a memory access request to an L2 cache memory and a main storage device.
FIG. 2 illustrates an operation sequence diagram which illustrates pipeline processing of an L2 cache system having a configuration of Fig.1A and Fig.1B.
FIG. 3 illustrates an image of pipeline processing of an L2 cache system of Fig.1A and Fig.1B.
FIG. 4A illustrates a configuration diagram (No. 1) of a first embodiment.
FIG. 4B illustrates a configuration diagram (No. 2) of a first embodiment.
FIG. 5A illustrates a detailed circuit structure diagram of a new request storage unit 102 (request storage unit 0) and a bank address equal control unit (bank standby control unit) 402 of FIG. 4A.
FIG. 5B illustrates a detailed circuit structure diagram of a pipeline control unit 103 and a peripheral circuit of FIG. 4A.
FIG. 5C illustrates a detailed circuit structure diagram of a request storage unit 1 104 of FIG. 4A.
FIG. 5D illustrates a detailed circuit structure diagram of a bank address equal control unit (bank abort generation unit) 401 of FIG. 4A.
FIG. 6 illustrates a flowchart which illustrates a process of a first embodiment.
FIG. 7A illustrates a configuration diagram (No. 1) of a second embodiment.
FIG. 7B illustrates a configuration diagram (No. 2) of a second embodiment.

### DESCRIPTION OF EMBODIMENTS

Hereinafter, a detailed explanation is given for the embodiments for carrying out the present invention, in reference to the drawings.

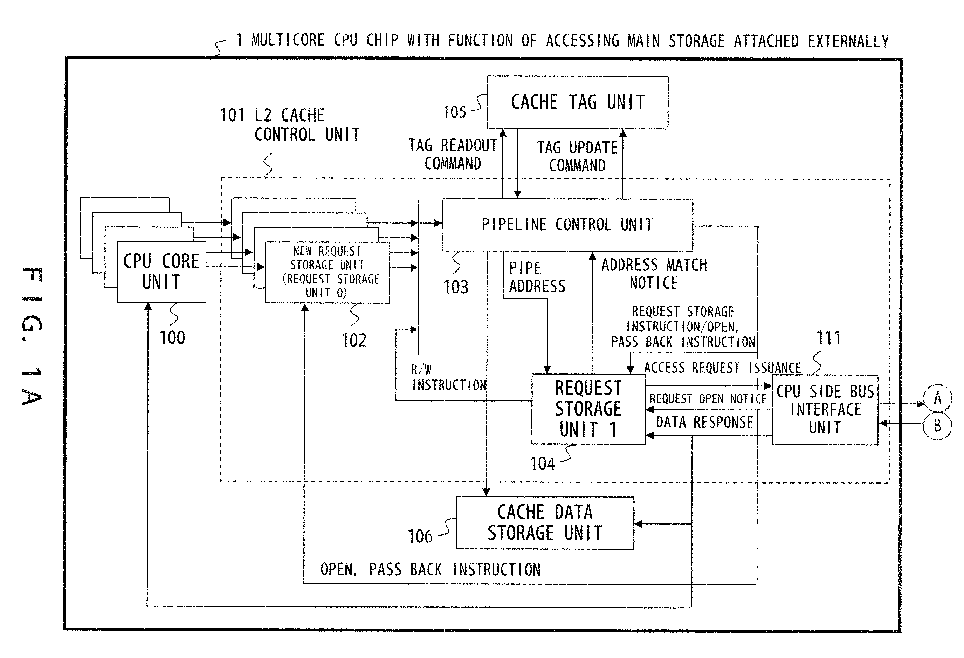

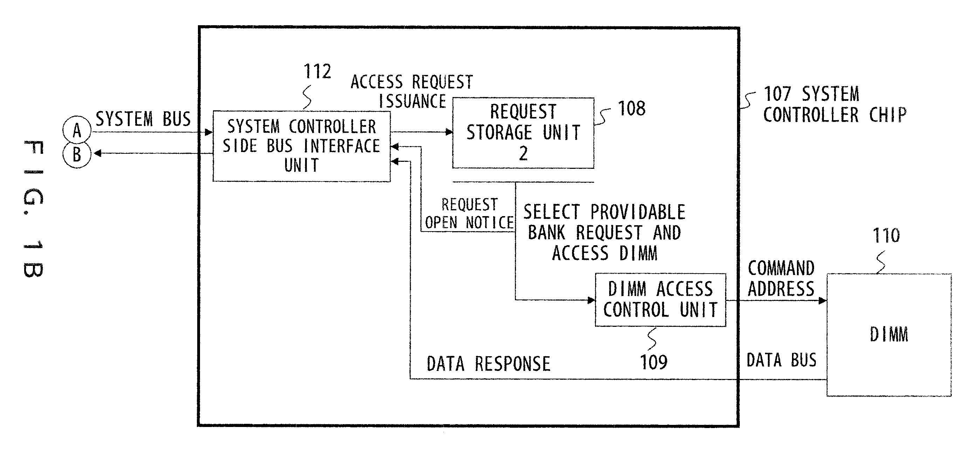

FIGs. 1A and 1B illustrate a general configuration of an information processing device in which an L2 cache memory is connected to a main storage device and which has a mechanism for pipeline-processing a memory access request to an L2 cache memory and a main storage device. In this configuration, a CPU core part and a part which accesses a main storage are divided into a multicore CPU chip 1 with a function of accessing a main storage attached externally and a system controller chip 107.

A CPU core unit 100 of FIG. 1A is an arithmetic processing processor which executes arithmetic processing, and one or more of them may be implemented. The CPU core unit 100 is one example of a command processing unit.

A new request storage unit 102 (also called "a request storage unit 0"), a pipeline control unit 103, and a request storage unit 104 (hereafter simply described "a request storage unit 1") of FIG. 1A constitute an L2 cache control unit 101.

One or more entries are implemented in the new request storage unit 102, corresponding to each CPU core unit 100. The new request storage unit 102 retains the memory access request in the entry which corresponds to the CPU core unit 100 for pipeline-processing at an L2 (secondary) cache memory when an L1 (primary) cache in the CPU core unit 100 makes a cache mistake.

The pipeline control unit 103 executes control for pipeline-processing the cache access and the main storage access of the memory access request stored in the new request storage unit 102.

A cache tag unit 105 and a cache data unit 106 of FIG. 1A constitute an L2 cache memory. The cache tag unit 105 stores a tag for each cache line. The cache data unit 106, for each cache line, retains data of an address on a DIMM (Dual Inline Memory Module) 110 (FIG. 1B) as a main storage device which is determined by an index corresponding to the cache line and a tag on the cache tag unit 105 corresponding to the cache line. From the pipeline control unit 103 to the cache tag unit 105, a tag read command is issued and the tag is read, or a tag update command is issued and the tag is updated. From the pipeline control unit 103 to the cache data unit 106, a read or write instruction (a R/W instruction) of data is issued, and a read operation or write operation of data is performed.

The request storage unit 1 104 (hereafter simply called a "request storage unit 1") of FIG. 1A, when a cache access by the pipeline control unit 103 to the cache tag unit 105 results in a cache mistake, retains a memory access request with the cache mistake. The request storage unit 1 retains each memory access request until the access to the DIMM 110 (FIG. 1B) is completed, until the cache tag unit 105 and the cache data unit 106 are updated, and until the data transfer to the CPU core unit 100 is completed.

A CPU side bus interface unit 111 of FIG. 1A is a multicore CPU chip 1 side interface circuit with a function of accessing a main storage attached externally, of a system bus which connects the multicore CPU chip 1 side interface circuit with a function of accessing a main storage attached externally, to a system controller chip 107.

A system controller side bus interface unit 112 in a system controller chip 107 of FIG. 1B is a system controller chip 107 side interface circuit of the system bus.

A request storage unit 2 108 (hereafter simply called "a request storage unit 2") in a system controller chip 107 of FIG. 18 retains a memory access request that has a cache mistake in an L2 cache control unit 101 of FIG. 1A. The request storage unit 2 retains each memory access request until the memory access request is read to the DIMM access control unit 109 in the system controller chip 107 and is then provided to a pipeline of the main storage access.

In storing the memory access request in the request storage units 1 and 2, a request storage instruction is issued from the pipeline control unit 103 to the request storage units 1 and 2, and the request storage units 1 and 2 execute a storage operation of the memory access request according to the instruction.

The DIMM access control unit 109 in the system controller chip 107 of FIG. 1B selects the memory access request of the providable banks from the request storage unit 2, and issues a command and an address of the memory access to the DIMM 110. When the memory access is read from the request storage unit 2 to the DIMM access control unit 109, a request open notice is reported to the request storage unit 1 of FIG. 1A from the request storage unit 2 through the system controller side bus interface unit 112 and the CPU side bus interface unit 111 of FIG. 1A.

The DIMM 110 of FIG. 1B is a memory module with a plurality of DRAM chips mounted over a printed circuit board, and is used as a main storage device.

A data response from the main storage device obtained by accessing the DIMM 110 is made to the cache data unit 106, the request storage unit 1, and to the CPU core unit 100 which is a request source of the memory access request of FIG. 1A.

The pipeline control unit 103 of FIG. 1A issues a write command to the cache data unit 106 in reply to the data response. With this, the pipeline control unit 103 writes data that has been given in a response from the main storage unit in a writable cache way from among cache lines which correspond to addresses of the response data on the cache data unit 106. In addition, the pipeline control unit 103 issues a tag update command to the cache tag unit 105, in reply to the data response. With this, the pipeline control unit 103 updates the tag of the part corresponding to the cache line and the cache way on the cache tag unit 105 by the tag which corresponds to the address of the response data.

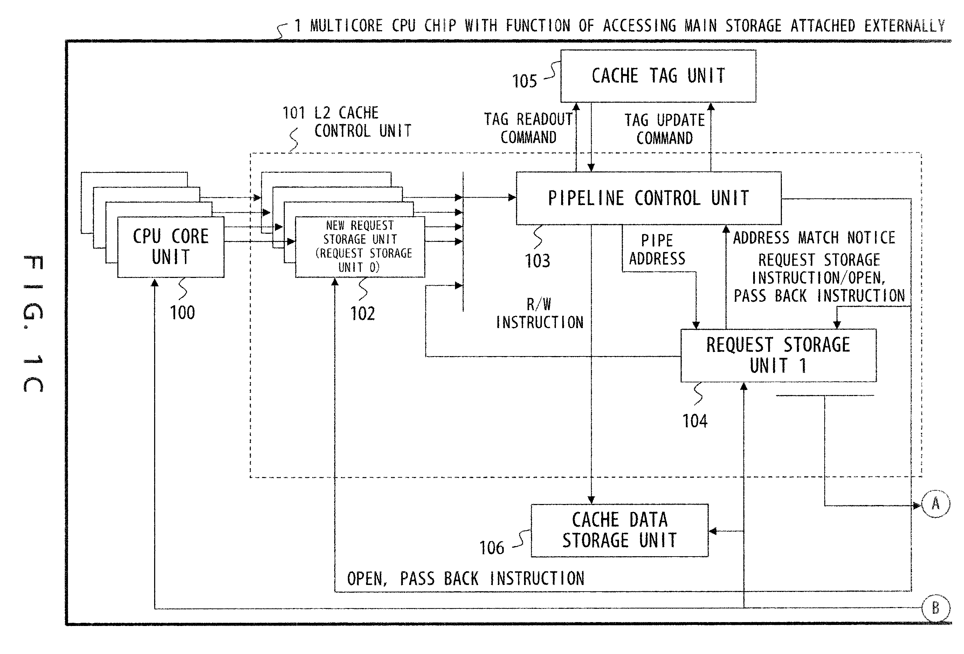

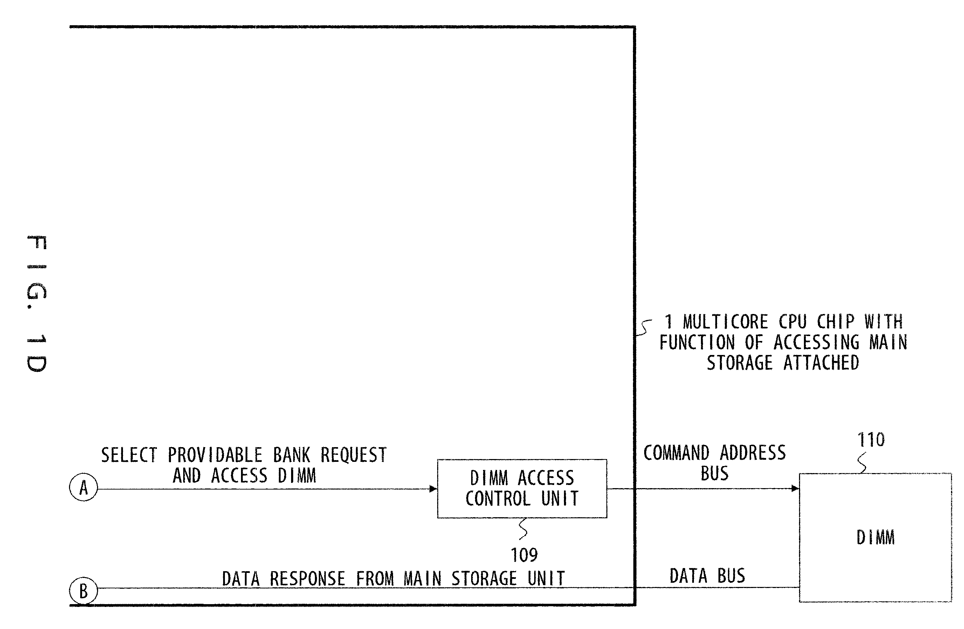

Similarly to FIGs. 1A and 1B, FIGs. 1C and 1D illustrate a general configuration of an information processing device in which an L2 cache memory is connected to the main storage device and which has a mechanism for pipeline-processing a memory access request to an L2 cache memory and a main storage device. In the configuration, the part for accessing the main storage is implemented, as one chip, in a multicore CPU chip 1 with a function of accessing a main storage attached externally.

In this configuration, the CPU side bus interface unit 111 of FIG. 1A and the system controller side bus interface unit 112 of FIG. 1B are omitted, and further, the function of the request storage unit 2 of FIG. 1B is also omitted and is integrated into the request storage unit 1. The control is the same as that of FIGs . 1A and 1B, except that the request storage unit 1 has the function of the request storage unit 2 and that communication control between the request storage unit 1 and the request storage unit 2 is omitted.

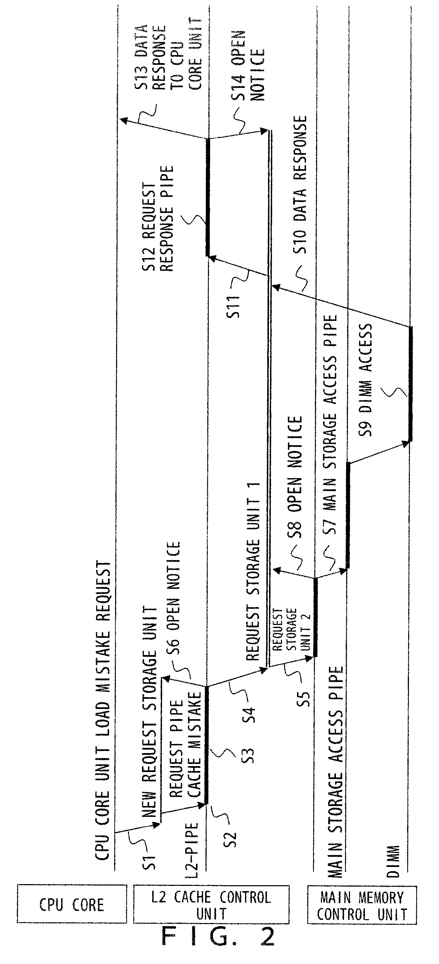

FIG. 2 illustrates an operation sequence diagram which illustrates pipeline processing of an L2 cache system having the configuration of Fig.1A and Fig.1B.

First, the CPU core unit 100 fails a load command, for example, and when an access to an L1 (Level-1: primary) cache memory in the CPU core fails, a new memory access request is issued in an L2 cache control unit 101. With this, the memory access request is received by a new request storage unit 102 in an L2 cache control unit 101 (sequence S1).

A memory access request is provided from the new request storage unit 102 to a pipeline of an L2 cache memory (described as "L2-PIPE" in FIG. 2) (sequence S2). The L2-PIPE does not illustrate a physical circuit but illustrates a status of pipeline processing in accordance with a time lapse.

When a memory access request provided to the L2-PIPE makes a cache mistake at the L2 cache memory (sequence S3), the memory access request that has a cache mistake that has occurred is stored in the request storage unit 1 (sequence S4). Further, the memory access request is stored in the request storage unit 2 in a system controller chip 107 of FIG. 1B (sequence S5). A transfer of the memory access request from the request storage unit 1 to the request storage unit 2 is executed from the CPU side bus interface unit 111 of FIG. 1A through a system controller side bus interface unit 112 of FIG. 1B, via the system bus. In addition, an open notice for an entry which corresponds to the memory access request is reported from the pipeline control unit 103 to the new request storage unit 102 (sequence S6). With this, the new request storage unit 102 opens the entry which corresponds to the memory access request and gets ready to receive the subsequent memory access request.

The request storage unit 1 and the request storage unit 2 respectively include a plurality of entries which retain the memory access request. The pipeline control unit 103 extracts one memory access request from one entry in the new request storage unit 102 and executes a cache access. As a result, a cache hit is performed, and the data response to the CPU core unit 100 is completed. Alternatively, the memory access request is stored in the request storage units 1 and 2, by a cache mistake.

The memory access request retained at the request storage unit 2 in the system controller chip 107 is provided to the pipeline (described as "a main storage access pipe" in FIG. 2) for accessing the DIMM 110 sequentially in the order beginning from the memory access which has a processable bank address. The main storage access pipe does not illustrate a physical circuit but illustrates a status of pipeline processing of the main storage access in accordance with a time lapse, similarly to the L2-PIPE. The DIMM access control unit 109 extracts the memory access request from the request storage unit 2 (sequence S7) and at the same time, it opens the entry of the request storage unit 2, and so reports to the request storage unit 1 (sequence S8). The notice from the request storage unit 2 to the request storage unit 1 is executed from the system controller side bus interface unit 112 of FIG. 1B through the CPU side bus interface unit 111 of FIG. 1A via the system bus. With this, the request storage unit 2 becomes ready to receive a new memory access request at the opened entry. The DIMM access control unit 109 generates a command and an address which correspond to the memory access request which has been extracted, and executes a memory access to the DIMM 110 (sequence S9).

When the memory access in the DIMM 110 is completed, a data response is transmitted from the DIMM 110 to the request storage unit 1 (sequence S10). The data response from the request storage unit 2 to the request storage unit 1 is executed from the system controller side bus interface unit 112 of FIG. 18 through the CPU side bus interface unit 111 of FIG. 1A via the system bus. As a result, a request response pipe is started up on the L2-PIPE from the request storage unit 1 through the pipeline control unit 103 (sequence S11). In the request response pipe, the pipeline control unit 103 executes writing of the response data to the cache data unit 106 and updating of the tag of the cache tag unit 105 (sequence S12). Further, the pipeline control unit 103 makes a data response to the CPU core unit 100 (sequence S13). The data response to the CPU core unit 100 is executed when the memory access request is a load request and is not a pre-fetch request which reads necessary data in a cache memory beforehand. Finally, the opening of the relevant entry of the memory access request is reported to the request strage unit1 (sequence S 14). With this, the relevant entry of the request storage unit 1 is opened.

In the control operations mentioned, so far, the pipeline control unit 103 extracts one memory access request from a plurality of entries of the new request storage unit 102 to execute a cache access, and opens the entry of the new request storage unit 102. After that, when a cache mistake occurs in one memory access request and causes the main storage access to be necessary, the pipeline control unit 103 delivers the memory access request to the request storage unit 1 and the request storage unit 2. With this, the pipeline control unit 103 may open processing which corresponds to the memory access request for the time being, on the L2-PIPE, and read another memory access request from a new entry of the new request storage unit 102. As a result, the DIMM access control unit 109 may read memory access requests from the new request storage unit 102 one after another and consecutively peform pipeline-processing for the cache access which corresponds to each memory access request.

Further, the DIMM access control unit 109 in the system controller chip 107, after extracting one memory access request from the request storage unit 2, opens the relevant entry of the request storage unit 2 and makes the subsequent memory access request get ready for receipt by the entry. Unless it has the same bank address, then, the DIMM access control unit 109 may extract the subsequent memory access request from the request storage unit 2 and consecutively perform processing. Thus, an efficient main storage access is realized by pipeline processing of the main storage access pipe, in the system controller chip 107 as well.

The pipeline control unit 103 includes a counter which counts the number of entries used by the request storage unit 1. The pipeline control unit 103, when a cache mistake has occurred as a result of it reading the memory access request from the new request storage unit 102 and making a cache access, and when there is no vacancy in the request storage unit 1, reports to the new request storage unit 102 a passback instruction. Consequently, the relevant entry of the new request storage unit 102 is not opened and it enters a delayed state.

In addition, a pipe address (an address requested by the memory access request) to which the pipeline control unit 103 currently performs pipeline processing is reported, from the pipeline control unit 103 to the request storage unit 1. As a result, the request storage unit 1, when it detects matching of the address requested by the memory access request in the entry of the request storage unit 1 and the pipe address, reports, to the pipeline control unit 103, an address match notice. In this case, since the data of the address of the memory access request to which the pipeline control unit 103 intends to commence pipeline processing is currently stored in the entry of the request storage unit 1 and is in a state of occupying the entry (in the course of commencement), re-accessing main storage is not required. Therefore, the pipeline control unit 103 reports to the new request storage unit 102 a passback instruction when it receives an address match notice. Consequently, the relevant entry of the new request storage unit 102 is not opened and enters a delayed state. After the cache tag unit 105 and the cache data unit 106 are updated by executing the relevant memory access request in the request storage unit 1, the memory access request requesting the same address in the new request storage unit 102 is subjected to pipeline processing. With this, the memory access request performs a cache hit, and the relevant data is loaded from the cache data unit 106 to the CPU core unit 100 which is the request source.

In addition to the above, when an abort condition of the pipeline is established in the pipeline control unit 103, a passback instruction is reported from the pipeline control unit 103 to the new request storage unit 102 or to the request storage unit 1. As a result, the relevant entry of the new request storage unit 102 or of the request storage unit 1 is not opened and enters a delayed state.

In the configuration of an L2 cache system of FIG. 1A and FIG. 1B, main storage device constituted of a DIMM 110 which is a type of the DRAM is divided into a certain number of banks. And the main storage device has a feature wherein processing a subsequent memory access request is not available in the same bank for a certain period of time, when processing of the memory access request to a certain bank is commenced. Therefore, in the above configuration, when a certain memory access request is provided from a request storage unit 2 to the DIMM access control unit 109, the memory access request having the same bank address as the request is excluded from a selection target of being extracted from the request storage unit 2 for a certain period of time. Then, the processing is performed by selecting in the order beginning from an old processable memory access request from among the processable memory access requests having the processable bank address in the entry of the request storage unit 2.

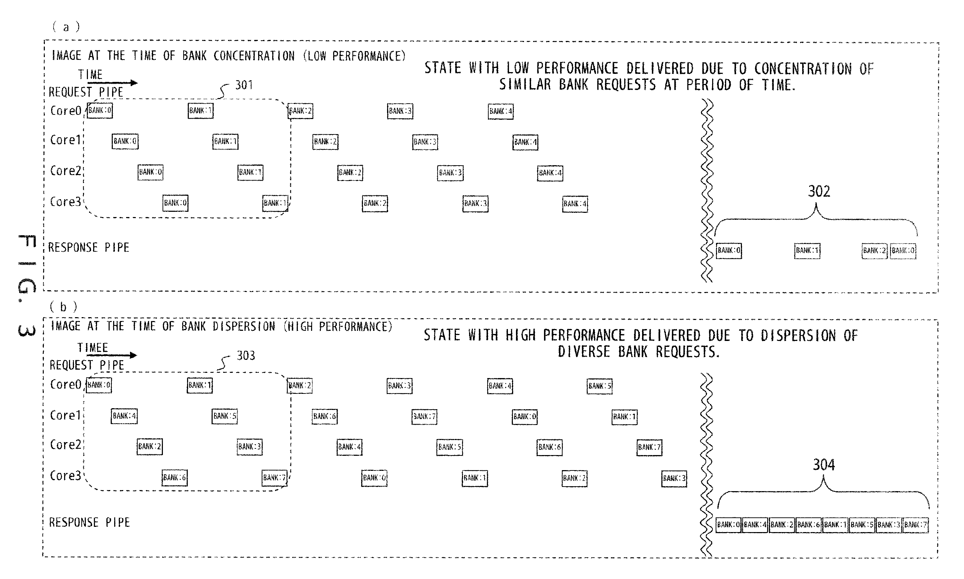

FIG. 3 illustrates an image of pipeline processing of an L2 cache system of Fig.1A and Fig.1B.

Here, a case is considered in which four processors of Core 0, Core 1, Core 2, and Core 3 are implemented as CPU core units 100 of FIG. 1A. BANK:0, BANK:1, BANK:2, BANK:3, BANK:4, BANK:5, BANK:6, and BANK:7 in FIG. 3 indicate that the memory access request of the bank address indicated by each label is subjected to pipeline processing. Further, these labels indicate that the data response of the bank address indicated by each label is subjected to pipeline processing on the request response pipe. In the following, explanations are given omitting the label "BANK:" and are expressed simply as "0" for "BANK: 0", and "1" for "BANK: 1".

First, a case is considered in which a service for treating streaming data such as online video distribution and the like is executed in a system with four CPU core units 100 consisting of Cores 0 to 3 implemented. In this situation, a case is considered in which a request for reproducing the same streaming data is made from a plurality of CPU core units 100 almost simultaneously. In such a case, us illustrated in 301 of FIG. 3(a), it is possible for the memory access requests of the same bank to be consecutively issued on the request pipe from each CPU core unit 100 of Cores 0 to 3, in such a manner, for example, as 0→0→0→0→1→1→1→1. In this case, when a cache mistake occurs in the L2 cache memory, the DIMM access control unit 109 reads from the request storage unit 2 the first memory access request of BANK:0 and executes the memory access to the DIMM110. And after that, for a certain period of time, the DIMM access control unit 109 cannot read from the request storage unit 2 the same memory access request of the same BANK: 0. That is to say, in the example of 301 of FIG. 3(a), after the memory access request of the first BANK:0 is executed, the subsequent three memory access requests having the same BANK: 0 stay in the request storage unit 2 for a certain period of time. And as indicated in 302 of FIG. 3(a), other memory access requests of BANK: 1 or BANK: 2 are read from the request storage unit 2 to the DIMM access control unit 109, and the memory access to the DIMM 110 is executed. As a result, in the data response on the request response pipe, data responses such as BANK: 1, BANK: 2, and the like follow with an interval after the first data response of the BANK: 0, as indicated in 302 of FIG. 3(a). And the subsequent data response of BANK: 0 finally appears after a lapse of a certain period of time, after the data response of the first BANK: 0 is made.

In a situation indicated in FIG. 3(a), the data response to the same bank not only causes serious delays but also comes to have many memory access requests to the same bank remaining on the request storage unit 1 or 2. Consequently, a new memory access request cannot be stored in the request storage units 1 and 2, and usable entries of the request storage units 1 and 2 are exhausted. That is to say, it can be said that the entries of the request storage units 1 and 2 are occupied in vain thereby substantially decreasing the number of entries, and such a situation causes the problem of seriously lowering the performance of the L2 cache control unit 101 compared with a theoretical performance.

As a means to solve this problem, the first thing to be considered is increasing the number of entries of the request storage units 1 and 2. For example, when a number of entries which is large enough to store memory access requests for all streams to the DIMM 110 are prepared, this is expected to alleviate an effect of a local deviation. However, this means has a problem of causing a physical area which occupies an integrated circuit to increase.

Therefore, it is important that the bank of the request storage units 1 and 2 maintains a constantly equal state without causing any increase in the physical area. In other words, it becomes important, from the viewpoint of cache control, to perform access control in which the banks on the main storage unit requested by the memory access request are not biased to certain banks but are equally dispersed on a pipeline of the main storage access at the time of a cache mistake. In embodiments for which explanations are given hereafter, such access control is called equalization of banks in the pipeline access from the cache control unit to the main storage device.

As indicated in 303 of FIG. 3(b), from one CPU core unit 100, a memory access request such as 0→1→2→3→4 is output to the streaming data of the ccnsecutive bank accesses. However, a case is considered here in which a wide variety of memory access requests of banks are sequentially issued on the request pipe, as indicated as 0→4→2→6→1→5→3→7, and the like, from the viewpoint of the whole, integrating each CPU core unit 100 of Cores 0 to 3. In this case, even when a cache mistake occurs in the L2 cache memory, the memory access requests of each bank address may be read one after another from the request storage unit 2 to the DIMM access control unit 109. As a result, a data response corresponding to each bank address may be processed continuously without any problem and in the same order as the order on the request pipe, on the request responses pipe in which a sequence is executed as sequence 12 of FIG. 2, as indicated in 304 of FIG. 3(b). In this case, a data transfer performance from the main storage unit to the L2 cache control unit 101 and to the CPU core unit 100 becomes maximized. However, a wide variety of memory access requests of the bank are not always made as indicated in FIG. 3 (b). Accordingly, it is desired that equalization of banks in the pipeline access from the memory cache control unit to the main storage device be made further appropriately.

In a first embodiment for which explanations are given hereafter, a main storage device having a configuration of being divided into banks, a main memory control device configured to control the main storage device, a cache memory for the main storage device, and a cache control device configured to control the cache memory are contained. To a new memory access request, in the cache control device, a tag which retains the status of the cache memory is searched for by pipeline processing from the new request storage unit through the pipeline providing unit. When a cache mistake occurs as a result of the processing, the cache control device stores for each cache line the memory access request that has a cache mistake in the request storage unit 1 as the memory access request that is in the course of being commenced, thereby making a request to the main storage unit, and at the same time, issues the memory access request to the main memory control device. The request storage unit 1, after it receives the data response from the main storage unit, updates the data tag unit and the data storage unit of the cache memory by pipeline processing, and at the same time, opens the entry of the request storage unit 1. The request storage unit 1 performs, at the pipeline, an address matching for the subsequent memory access requests and interrupts the processing to the same address. Then, the request storage unit 1 temporarily stores the memory access request from the cache control device in the request storage unit 2 commonly shared by each bank in the main memory control device, and, by selecting from the request storage unit 2 the requests of the unprocessed banks, counts the number of memory access requests stored in the request storage unit 1 for the banks of the main storage device corresponding to the new memory access request during the pipeline procesing in the information processing device which performs processing for the main storage device, gives instructions to interrupt processing when the counted value exceeds the specified threshold, gives instructions to proceed with processing when the counted value does not exceed the specified threshold, and issues the memory access request to the request storage unit 2 of the main memory control device. The memory access request to be counted in the request storage unit 1 is the memory access request which has not received the open notice of the request storage unit 2 from among the memory access requests stored in the request storage unit 1. As a result, the bank of the request stored in the request storage unit 2 of the main memory control device is led to be equalized and the main storage transfer performance which is close to a theoretical performance may be obtained.

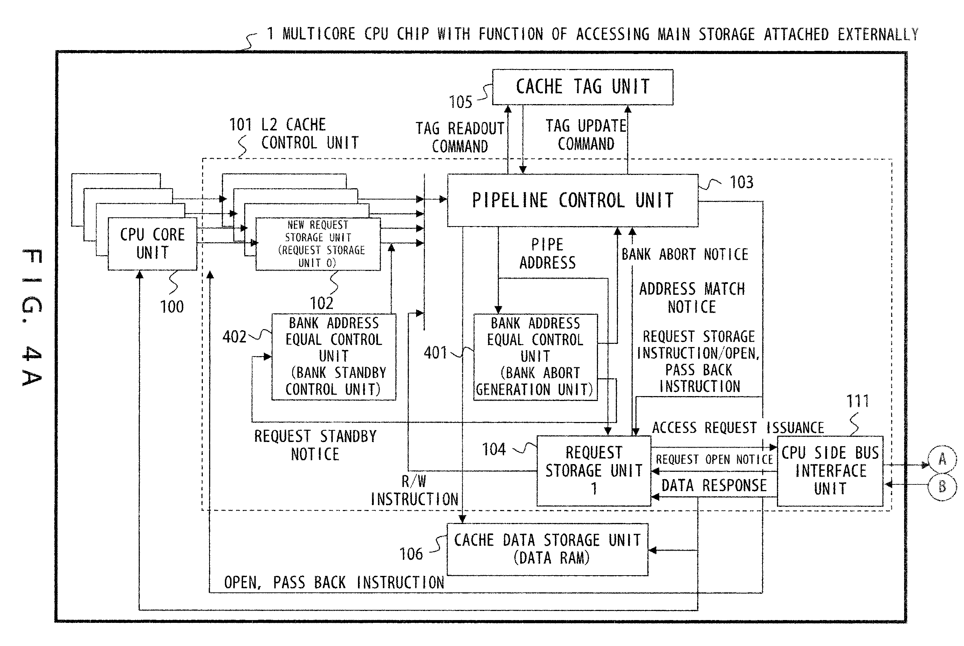

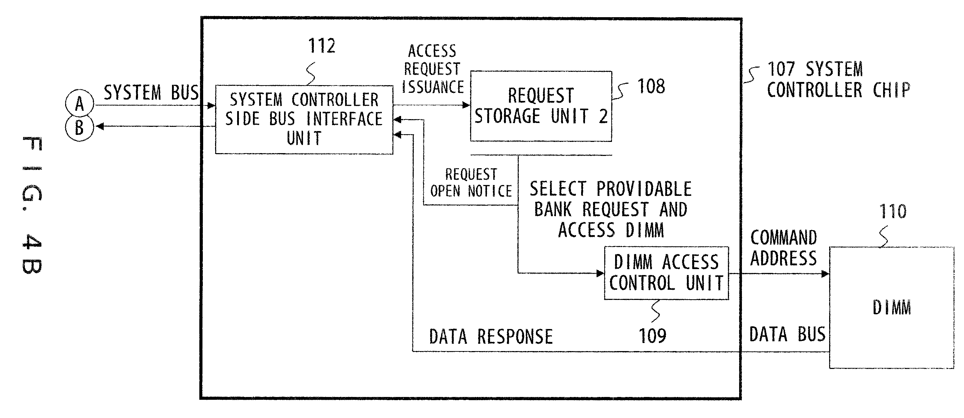

The first embodiment has a system configuration as indicated in FIG. 4A and FIG.4B that is an improved version of the system configuration of FIG. 1A and FIG. 1B on which the first embodiment is configured as a basis. In FIG. 4A and FIG. 4B, the same numbers are allotted to parts which perform the similar operations to FIG. 1A and FIG. 1B. Similarly to the configuration of FIG. 1A and FIG. 1B, in the configuration of this embodiment, a CPU core part and a part which accesses a main storage are divided into a multicore CPU chip 1 with a function of accessing a main storage attached externally and a system controller chip 107.

The configuration of the system controller chip 107 of FIG. 4B is the same as the configuration of FIG. 1B.

In FIG. 4A, an L2 cache control unit 101 includes a bank address equal control unit (bank abort generation unit) 401 and a bank address equal control unit (bank standby control unit) 402.

The bank abort generation unit 401, according to the memory access request retained in the request storage unit 1 and the request storage unit 2, counts the number of memory access requests to the DIMM110 of the main storage unit for each bank. Together with this, when any of the number of counted memory access requests for each bank exceeds a specified value, the bank abort generation unit 401 reports to the pipeline control unit 103 a bank abort notice which gives instructions to interrupt the main storage access. With this, the pipeline control unit 103 reports, to the new request storage unit 102, a passback instruction. As a result, the relevant entry of the new request storage unit 102 is not opened but it enters a delayed state, and the execution of the relevant memory access request is delayed.

In addition, the bank abort generation unit 401 reports to the bank standby control unit 402 a request standby notice for each bank in which the number of memory access requests for the DIMM 110 for each counted bank exceeds a specified value.

The bank standby control unit 402 suppresses an output of a memory access request in a delayed state which makes a request for the bank address corresponding to the request standby notice be output by the bank abort generation unit 401 from among the memory access requests output from the entry of the new request storage unit 102. As a result, providing the relevant memory access request to the pipeline of the L2 cache control unit 101 is suppressed until the count value of the memory access request of the relevant bank for the DIMM 110 falls below the specified value.

Each time the memory access request is read from the request storage unit 2 to the DIMM control unit 109 and is executed, the count value of the bank corresponding to the memory access request is decreased by one.

With the bank address equal control unit consisting of the bank abort generation unit 401 and the bank standby control unit. 402 mentioned above, excess issuance of the memory access requests of the same bank may be minimized. Further, the memory access requests of the banks which are less frequently issued compared with those of other banks may be issued to the DIMM 110 preferentially. With this, the issuance state of the memory access request may be naturally set to a state in which a wide variety of memory access requests of banks are steadily stored in the request storage unit 1 or 2 as illustrated in FIG. 3 (b), and equalization of bank accesses may be realized.

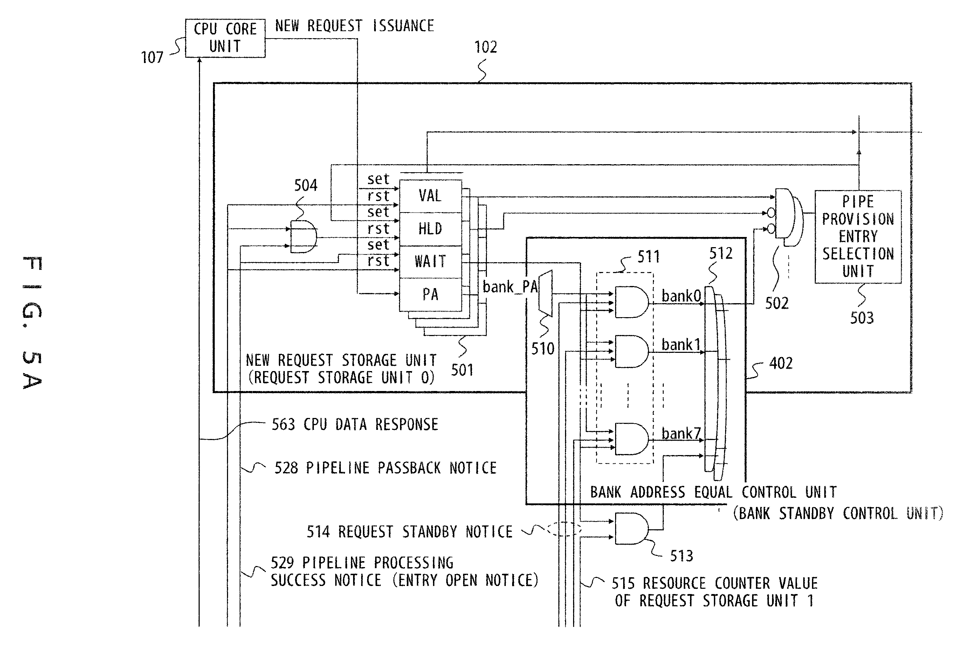

FIG. 5A illustrates a detailed circuit structure diagram of a new request storage unit 102 (request storage unit 0) and a bank address equal control unit (bank standby control unit) 402 of FIG. 4A.

A new request storage unit 102 includes an entry unit 501, an entry output gate 502, a pipe provision entry selection unit 503, and a reset OR gate 504.

The entry unit 501 is implemented, and corresponds to each one or more CPU core units 100. The entry unit 501 retains the memory access request for pipeline processing at an L2 cache memory, when an L1 cache in the CPU core unit 100 makes a cache mistake. At this time, with the memory access request from the CPU core unit 100, a VAL flag is set, and physical address data which makes a request for an access is written as PA (Physical Address) data. A VAL flag is a flag which indicates whether or not the memory access request set in the entry unit 501 is valid. Physical address data consists of 40 bits, for example, and 21 bits from the 39^{th} bit to the 19^{th} bit indicate a tag. In addition, 12 bits from the 18^{th} bit to the 7^{th} bit indicate an index (=the number of cache lines). That is to say, the number of cache lines of the L2 cache memory in the first embodiment is 2¹²=4096 lines. 3 bits from the 9^{th} bit to the 7^{th} bit in the index indicate a bank address. That is to say, the number of banks of the DIMM 110 in the first embodiment is 2³=8. Further, 7 bits from the 6^{th} bit to the 0^{th} bit indicate an offset address in the same line. In the entry unit 501, an HLD flag and a WAIT flag are reset when power is applied. An HLD flag is a flag which indicates that the memory access request of the entry unit 501 occupies the entry of the request storage unit 1 in the L2 cache control unit. A WAIT flag is a flag which indicates that the memory access request is aborted in the L2 cache control unit 101 and that the memory access request is in a delayed state for reissuance to the L2 cache control unit 101.

The entry output gate 502 is provided corresponding to one or more entry units 501 and determines whether or not the output of each entry unit 501 is validated. The entry output gate 502 enters an ON state when the VAL flag of the entry unit 501 is in an ON state, the HLD flag is in an OFF state, and the output of the bank standby control unit 402 is in an OFF state. When the memory access request is first set from the CPU core unit 100 to the entry unit 501, the HLD flag is in an OFF state. In addition, since the WAIT flag is also in an OFF state, an AND gate group 511 and an AND gate 513 corresponding to the entry unit 501 in the bank standby control unit 402 are all in an OFF state and accordingly, the output of the OR gate 512 enters an OFF state. Thus, when the memory access request is first set in the entry unit 501, the entry output gate 502 corresponding to the entry unit 501 is inevitably in an ON state and it outputs the memory access request to the pipe provision entry selection unit 503. In other words, a new memory access request is inevitably subjected to pipe line processing at least once, without precondition. The reason is that if a cache hit is performed in the memory access request, it is not necessary that it be delayed in the new request storage unit 102.

The pipe provision entry selection unit 503 selects the memory access request in accordance with a specified rule (for example, in the order beginning from an old memory access request) from among the memory access requests retained in the entry unit 501 corresponding to the entry output gate 502 in which the output is in an ON state. Then, the pipe provision entry selection unit 503 provides the selected memory access request to the pipeline control unit 103 of FIG. 4A. At this time, the relevant HLD flag of the entry unit 501 is reset (rst) in accordance with the output of the pipe provision entry selection unit 503. As a result, the entry output gate 502 corresponding to the entry unit 501 enters an OFF state. The memory access request of the entry unit 501 is not provided to the pipeline control unit 103 again, unless the HLD flag is reset through the reset OR gate 504 with a pipeline passback notice 528 from the pipeline control unit 103 entering an ON state. That is to say, in the entry unit 501, the execution result is delayed after the memory access request is provided to the pipeline control unit 103.

When the abort condition of the memory access request provided to the L2-PIPE (see FIG. 2) is established in the pipeline control unit 103, a pipeline passback notice 528 is reported to the new request storage unit 102 from the pipeline control unit 103. As a result, the HLD flag is made to be OFF through the reset OR gate 504 and at the same time, the WAIT flag is set. With this, the memory access request in the entry unit 501 enters a delayed state. In this state, the VAL flag is in an ON state and the HLD flag is in an OFF state in the entry output gate 502 corresponding to the entry unit 501. Accordingly, the presence or absence of the output of the entry output gate 502 is determined in accordance with the output of the bank standby control unit 402.

The AND gate 513 and the bank standby control unit 402 are provided, respectively, corresponding to each entry unit 501. In the AND gate 513, the WAIT flag of the entry unit 501 and a resource counter value 515 of the request storage unit 1 output from the pipeline control unit 103 of FIG. 4A are input. The resource counter value 515 of the request storage unit 1 counts the currently used number of entries in the request storage unit 1 of FIG. 4A. When there is a vacancy in the number of entries in the request storage unit 1, the resource counter value 515 of the request storage unit 1 is 0 and when there is no vacancy, the resource counter value 515 of the request storage unit 1 is 1. Therefore, when the memory access request of the entry unit 501 enters a delayed state having been passed back from the pipeline control unit 103, and when there is no vacancy in the number of entries in the request storage unit 1, the following control operation is executed. As the output of the AND gate 513 enters an ON (1) state and as the entry output gate 502 enters an OFF (0) state through the OR gate 512, provision of the memory access request which is in a delayed state to the pipeline control unit 103 is suppressed.

On the other hand, when the memory access request of the entry unit 501 enters a delayed state having been passed back from the pipeline control unit 103, and when there is a vacancy in the number of entries in the request storage unit 1, the output of the AND gate 513 enters an OFF state. In this case, the output of the AND gate group 511 is further judged. The AND gate group 511 consists of 8 gates corresponding to 8 banks from BANK 0 to BANK 7, for example. In each AND gate of the AND gate group 511, a result of decoding with a bank address decoder 510 the bank address (for example, the 9^{th} bit to the 7^{th} bit) in the PA data of the corresponding entry unit 501 is input. That is to say, the bank address decoder 510, by decoding the above bank address, has a plurality of output lines in which any one output from among 8 outputs corresponding to BANK 0 to BANK 7 enters an ON state. Each of these output lines is input to each AND gate of the AND gate group 511. In addition, in each AND gate of the AND gate group 511, the WAIT flag of the corresponding entry unit 501 is input. Further, in each AND gate of the AND gate group 511, a request standby notice 514 for each bank generated by the bank abort generation unit 401 is input. For example, in the AND gate corresponding to BANK 0 in the AND gate group 511, the WAIT flag, a signal which enters an ON state when the bank address of the PA data equals BANK 0 and which enters an OFF state otherwise, and the request standby notice 514 corresponding to BANK 0 are input.

For example, the request standby notice 514 corresponding to BANK 0 enters an ON state with the bank abort generation unit 401 when the number of memory access requests corresponding to BANK 0 which is currently requested for the DIMM 110 exceeds a specified value. Accordingly, the AND gate corresponding to BANK 0 in the AND gate group 511 enters an ON state when the memory access request of the corresponding entry unit 501 is in a delayed state, the bank address of the request is BANK 0, and the main storage access to BANK 0 currently exceeds a specified number. As a result, the entry output gate 502 corresponding to the entry unit 501 through the OR gate 512 enters an OFF state and provision of the memory access request which makes a request for BANK 0 in a delayed state in the entry unit 501 to the pipeline control unit 103 is suppressed. With this, a concentration of the memory access requests to BANK 0 to which the main storage is accessed over those to the other banks, BANK 1 to BANK 7 is avoided.

Control operations similar to those of BANK 0 are executed for BANK 1 to BANK 7 as well.

As mentioned above, with a function of the bank standby control unit 402, with regard to the memory access request in a delayed state in the entry unit 501, a concentration of the memory access requests to a portion of the banks is avoided, and the provision of the memory access request to each bank may be equalized.

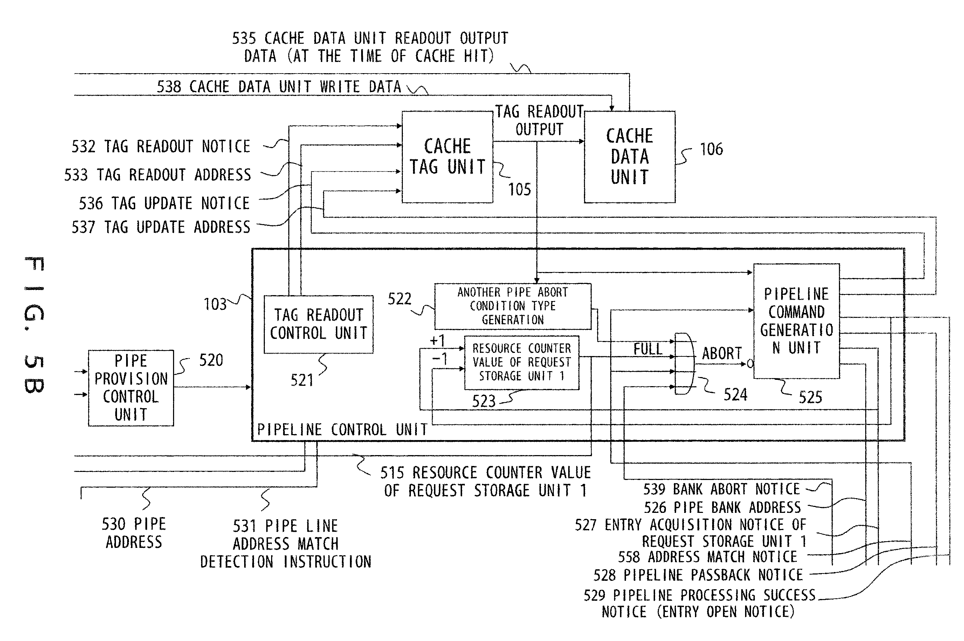

FIG. 5B illustrates a detailed circuit structure diagram of a pipeline control unit 103 and a peripheral circuit of FIG. 4A.

The memory access request output from the pipe provision entry selection unit 503 in the new request storage unit 102 of FIG. 5A is provided to the L-2 PIPE pipeline (see FIG. 2) controlled by the pipeline control unit 103 through a pipe provision control unit 520 of FIG. 5B.

The pipeline control unit 103 includes a tag readout control unit 521, other pipe abort condition type generation units 522, a resource counter 523 of the request storage unit 1, an abort OR gate 524, and a pipeline command generation unit 525.

The tag readout control unit 521 executes the following processing for the memory access request provided from the pipe provision control unit 520 to the L2-PIPE pipeline. First, a tag readout address 533 which is an index is generated, by setting the address data in the course of the memory access request as a pipe address 530 and extracting, for example, the 18^{th} bit to the 7^{th} bit of the pipe address 530. Subsequently, the tag readout control unit 521 generates a request tag by extracting, for example, the 39^{th} bit to the 19^{th} bit of the pipe address 530. Then, the tag readout control unit 521 outputs a tag readout notice 532 to the cache tag unit 105, and at the same time outputs the tag readout address 533. As a result, in the cache tag unit 105, a cache line corresponding to the tag readout address 533 is designated and each piece of tag data stored in each cache way corresponding to the cache line is read. Then, in the cache tag unit 105, whether or not any of each piece of tag data matches up with the request tag generated in the tag readout control unit 521 is compared.

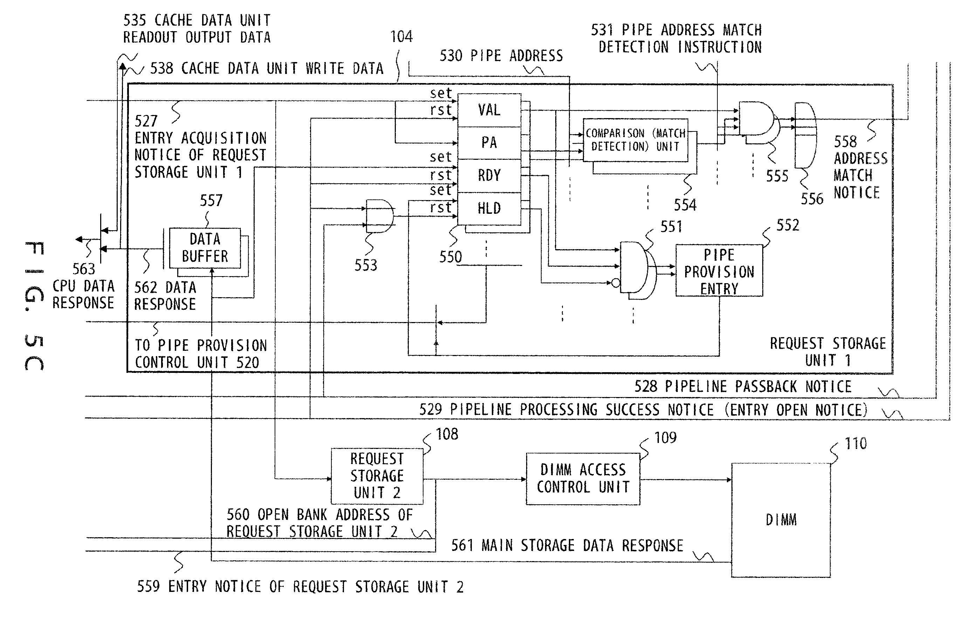

When any of the pieces of each tag data matches up with the request tag, a cache hit is judged to have occurred in the tag readout control unit 521 and the matched tag is output to the cache data unit 106 from the cache tag unit 105 as a tag readout output. As a result, a piece of cache data is read from the cache way corresponding to the tag readout output in which the match was detected of the cache line corresponding to the tag readout address 533 on the cache data unit 106. As the cache data connects to a later mentioned data response 562 of FIG. 5C as a cache data unit readout output data 535, a response is given to the CPU core unit 100 of FIG. 5A as a CPU data response 563. At this time, a pipeline processing success notice (entry open notice) 529 is output to the new request storage unit 102 of FIG. 5A from the pipeline command generation unit 525. As a result, in the above mentioned relevant entry unit 501 of FIG. 5A, the VAL flag, the HLD flag, and the WAIT flag of the relevant entry unit 501 are reset and the relevant entry of the new request storage unit 102 is opened.

When any of the tag data does not match up with the request tag, and when a cache mistake is judged to have occurred in the tag readout control unit 521, it is judged whether or not the issuance of the memory access request to the request storage unit 1 is available at an abort OR gate 524. First, the abort OR gate 524 judges whether or not the abort condition is in an ON state from the other abort condition type generation units 522. In addition, the abort OR gate 524 judges whether or not the resource counter 523 of the request storage unit 1 outputs a resource counter value 515 of the request storage unit 1 of a value 1 which indicates a count-full (FULL) state. In addition, the abort OR gate 524 judges whether or not an address match notice 558 is reported which indicates that the memory access request of the same address has already been provided from the request storage unit 1 of FIG. 4A. Further, the abort OR gate 524 judges whether or not the bank abort notice 539 is reported from the bank abort generation unit 401of FIG. 4A.

The abort OR gate 524 turns off an abort output for a pipeline command generation unit 525 when no judgment mentioned above is established. As a result, the pipeline command generation unit 525 searches for a vacant entry on the request storage unit 1 of FIG.4A and reports to the request storage unit 1 an entry acquisition notice 527 of the request storage unit 1, together with the memory access request that has caused a cache mistake to occur. Hereafter, the main storage access is executed through the request storage unit 1 and the request storage unit 2, and the data that has a cache mistake that has occurred is acquired. When the pipeline processing for the cache mistake succeeds, a pipeline processing success notice (entry open notice) 529 is output from the pipeline command generation unit 525 to the new request storage unit 102 of FIG. 5A. As a result, in the relevant entry unit 501 of FIG. 5A mentioned above, the VAL flag, the HLD flag, and the WAIT flag of the relevant entry unit 501 are reset, and the relevant entry of the new request storage unit 102 is opened.

The resource counter value 515 of the request storage unit 1 in the pipeline control unit 103 is increased by one (incremented) when the entry acquisition notice 527 of the request storage unit 1 is issued from the pipeline command generation unit 525 and the memory access request is registered in the request storage unit 1. The resource counter value 515 of the request storage unit 1 in the pipeline control unit 103 is decreased by one (decremented) when the pipeline processing success notice (entry open notice) 529 is issued from the pipeline command generation unit 525 and the entry of the request storage unit 1 is opened. That is to say, the resource counter 523 of the request storage unit 1 counts the currently used number of entries in the request storage unit 1. When there is a vacancy in the number of entries in the request storage unit 1, the resource counter value 515 of the request storage unit 1 is 0, and when there is no vacancy, the resource counter value 515 of the request storage unit 1 is 1. When the resource counter 523 of the request storage unit 1 outputs the resource counter value 515 of the request storage unit 1 of a value 1 which indicates a count-full (FULL) state, and when the output of the abort OR gate 524 enters an ON state, the abort is set to the pipeline command generation unit 525. As a result, the pipeline command generation unit 525 outputs the pipeline passback notice 528 to the new request storage unit 102 of FIG. 4A and FIG. 5A. As a result, the HLD flag is reset through the reset OR gate 504 of FIG. 5A, and at the same time, the WAIT flag is set. With this, the memory access request in the entry unit 501 is in a delayed state. Further, the resource counter value 515 of the request storage unit 1 of the value 1 is output to the new request storage unit 102. As a result, the output of the AND gate 513 enters an ON state and the entry output gate 502 enters an OFF state through the OR gate 512 in FIG. 5A, in a manner mentioned above. With this, the provision to the pipeline control unit 103 of the memory access request in a delayed state is suppressed. Thus, the excess issuance of the memory access requests to the request storage unit 1 is suppressed.

In addition, the abort OR gate 524 enters an ON state when the address match notice 558 is reported from the request storage unit 1 of FIG. 4A, the address match notice 558 indicating that the memory access request of the same address has already been provided. As a result, the abort is set to a pipeline command generation unit 525. In such a case, since the data of the address of the memory access request which the pipeline control unit 103 intends to issue to the request storage unit 1 is currently stored in the entry of the request storage unit 1 and is in a state of occupying the entry, re-accessing main storage is not required. Therefore, the pipeline command generation unit 525 reports to the new request storage unit 102 a pipeline passback notice 520 when it received the address match notice 558. As a result, the HLD flag is reset through the reset OR gate 504 of FIG. 5A, and at the same time, the WAIT flag is set. With this, the memory access request in the entry unit 501 is in a delayed state. After the cache tag unit 105 and the cache data unit 106 are updated by executing the relevant memory access request in the request storage unit 1, the memory access request requesting the same address in the new request storage unit 102 is provided to the pipeline again. With this, the memory access request in a delayed state performs a cache hit, and the cache data unit read out output data 535 is loaded from the cache data unit 106 to the CPU core unit 100, which is the request source.

Further, when the bank abort notice 539 is reported from the bank abort generation unit 401 of FIG. 4A, the abort OR gate 524 enters an ON state and the abort is set in the pipeline command generation unit 525. The bank abort generation unit 401, according to the memory access request retained in the request storage unit 1 and the request storage unit 2, counts for each bank the number of memory access requests to the DIMM110 of the main storage unit. Together with this, when any of the number of counted memory access requests for each bank exceeds a specified value, the bank abort generation unit 401 reports to the pipeline control unit 103 a bank abort notice 539 which gives instructions to interrupt the main storage access. With this, the pipeline command generation unit 525 outputs to the new request storage unit 102 a pipeline passback notice 528. As a result, the relevant entry unit 501 of the new request storage unit 102 is not opened, but it enters a delayed state, and the execution of the relevant memory access request is delayed. With the control operation using the bank abort notice 539 from the above mentioned bank abort generation unit 401 together with the operation of the bank standby control unit 402 of FIG. 5A as mentioned above, excess issuance of the memory access requests of the same bank may be minimized. Further, the memory access requests of the banks which are less frequently issued compared with those of other banks may be issued to the DIMM 110 preferentially. With this, the issuance state of the memory access request may be naturally set to a state in which a wide variety of memory access requests of banks are steadily stored in the request storage unit 1 or 2 as illustrated in FIG. 3 (b), and equalization of bank accesses may be realized.

The abort OR gate 524 judges whether or not a variety of abort conditions are in an ON state from the other pipe abort condition type generation units 522, and sets the abort for the pipeline command generation unit 525 in accordance with a judgment result.

FIG. 5C illustrates a detailed circuit structure diagram of a request storage unit 1 104 of FIG. 4A. The request storage unit 1 includes an entry unit 550, an entry output gate 551, a pipe provision entry selection unit 552, and a reset OR gate 553. A plurality of entry units 550 are implemented so that they may pipeline process a plurality of memory access requests. Similarly, a plurality of entry output gates 551 and reset OR gates 553 are implemented, and correspond to each entry unit 550. In addition, the request storage unit 1 has a following configuration corresponding to each entry unit 550. First, the request storage unit 1 includes a comparison (match detection) circuit 554 for detecting a match of the PA data of the corresponding entry unit 550 and the pipe address 530 provided from the pipeline control unit 103. In addition, the request storage unit 1 includes an AND gate 555 for outputting the output of the comparison (match detection) circuit 554 on the condition that the VAL flag of the corresponding entry unit 550 and the pipe address match detection instruction 531 provided from the pipeline control unit 103 are in an ON state. Further, the request storage unit 1 includes an address match OR gate 556 for calculating the OR of the output of the AND gate 555 for each entry unit 550 and providing the OR to the abort OR gate 524 in the pipeline control unit 103 of FIG. 5B as an address match notice 558. Further, the request storage unit 1 temporarily retains a main storage data response 561 from the DIMM 110, which is the main storage unit. After that, the main storage data response 561 is transferred to the cache data unit 106 of FIG. 5B as cache data unit write data 538 or to the CPU core unit 100 of FIG. 5A as a CPU data response 563.

When the entry acquisition notice 527 of the request storage unit 1 and the memory access request for accessing the main storage are reported from the pipeline command generation unit 525 of FIG. 5B, the following operation is executed. In the relevant entry unit 550 of the request storage unit 1, with the entry acquisition notice 527 of the request storage unit 1, the VAL flag is set, and physical data which makes an access request as PA data is written. A VAL flag is a flag which indicates whether or not the memory access request set in the entry unit 550 is valid. Physical address data has a configuration which is similar to PA data of the entry unit 501 of FIG. 5A mentioned above and consists of 40 bits, for example. An RDY flag and and an HLD flag are reset initially. An RDY flag is a flag which indicates that a preparation of providing the request response pipe (see the sequence S12 of FIG. 2) is completed. An HLD flag is a flag which indicates that the memory access request of the entry unit 550 is being processed in the request response pipe of the L2 cache control unit 101.

In parallel with the registration of the request storage unit 1 in the entry unit 550 as mentioned above, the memory access request for the main storage access which was reported together with the entry acquisition notice 527 of the request storage unit 1 from the pipeline command generation unit 525 of FIG. 5B is registered in the request storage unit 2 as well. The transfer of the memory access request from the request storage unit 1 to the request storage unit 2 is executed from the CPU side bus interface unit 111 of FIG. 4A through the system controller side bus interface unit 112 of FIG. 4B via a system bus. The control for the request storage unit 1 and the request storage unit 2 to operate in cooperation is similar to the operation sequence which was mentioned above in FIG. 2. That is, the memory access request retained at the request storage unit 2 in the system controller chip 107 is read by the DIMM access control unit 109 sequentially in the order beginning from the memory access request which has a processable bank address and is provided to the main storage access pipe for accessing the DIMM 110. The DIMM access control unit 109 generates a command and an address corresponding to the processable bank address memory access request from the request storage unit 2 and executes the memory access to the DIMM 110. When the memory access in the DIMM 110 is completed, the main storage data response 561 is transferred from the DIMM 110 to a data buffer 557 in the request storage unit 1. The data response from the request storage unit 2 to the data buffer 557 is executed from the system controller side bus interface unit 112 of FIG. 4B through the CPU side bus interface unit 111 of FIG. 4A via a system bus.

An RDY flag is set in the relevant entry unit 550 of FIG. 5C according to a transmission of the main storage data response 561. Here, the entry output gate 551 is provided and corresponds to each entry unit 550 and determines whether or not the output of each entry unit 550 is validated. The entry output gate 551 enters an ON state when the VAL flag of the entry unit 550 is in an ON state, the HLD flag is in an OFFstate, and the RDY flag is in an ON state. As mentioned above, when the main storage data response 561 corresponding to the memory access request of the entry unit 550 is given from the DIMM 110, the RDY flag enters an ON state. With this, the entry output gate 551 corresponding to the entry unit 550 enters an ON state and outputs the memory access request to the pipe provision entry selection unit 552.

The pipe provision entry selection unit 552 selects the memory access request from among the memory access requests retained in the entry unit 550 corresponding to the entry output gate 551 in which the output is in an ON state in accordance with a specified rule (for example, in the order beginning from an old memory access request). Then, the pipe provision entry selection unit 552 provides the selected memory access request to the pipe provision control unit 520 of FIG. 5B. At this time, in accordance with the output of the pipe provision entry selection unit 552, an HLD flag of the relevant entry unit 550 is set. As a result, the entry output gate 551 corresponding to the entry unit 550 is inevitably in an OFF state. The memory access request of the entry unit 550 is not provided to the pipe provision control unit 520 again, unless a pipeline passback notice 528 from the pipeline control unit 103 enters an ON state and the HLD flag is reset through the reset OR gate 553. That is to say, in the entry unit 550, the execution result is delayed after the memory access request is provided to the pipeline control unit 103. Consequently, the request reponse pipe is started up on the pipeline control unit 103 (see the sequence S11 of FIG. 2).

The pipeline control unit 103, when the abort (discontinuation) condition is not generated in the request response pipe, executes writing the main storage data response 561 in the cache data unit 106 and an update of the tag of the cache tag unit 105 (the sequence S12 of FIG. 2). More specifically, the pipeline command generation unit 525 of FIG. 5B executes the following operation in accordance with the memory access request provided from the pipe provision entry selection unit 552 of FIG. 5C to the pipe provision control unit 520 of FIG. 5B. First, the pipeline command generation unit 525 extracts, for example, the 18^{th} bit to the 7^{th} bit of the address data in the memory access request and generates a tag update address 537 which is an index. Next, the pipeline command generation unit 525 extracts, for example, the 39^{th} bit to the 19^{th} bit of the above address data and generates the request tag. Then, the pipeline command generation unit 525 outputs to the cache tag unit 105 a tag update notice 536 and, together with this, outputs the tag update address 537. As a result, in the cache tag unit 105, a cache line corresponding to the tag update address 537 is designated and one cache block from among each cache way corresponding to the cache line is expelled. Then, on the cache block, a new request tag is overwritten. Together with this, a data response 562 which is temporarily retained in the data buffer 557 of FIG. 5C is written in an area corresponding to the cache block on the cache data unit 106 as cache data unit write data 538. Together with the above operation, the data response 562 is transferred to the CPU core unit 100 of FIG. 5A (see the sequence S13 of FIG. 2) as a CPU data response 563. Data responses to the CPU core unit 100 are performed when the memory access request is not a pre-fetch request but is a load request.

After the operation of the request response pipe as mentioned above is executed, the pipeline command generation unit 525 of FIG. 5B reports to the request storage unit 1 an opening of the relevant entry of the memory access request as a pipeline processing success notice (entry open notice) 529 (see the sequence S14 of FIG. 2). According to this notice, in FIG. 5C, the VAL flag, the RDY flag, and the HLD flag of the relevant entry unit 550 are reset and the relevant entry unit 550 of the request storage unit 1 is opened.

When the request response pipeline in the pipeline control unit 103 is aborted for some reason, a pipeline passback notice 528 is reported from the pipeline command generation unit 525 of FIG. 5B to the request storage unit 1 of FIG. 5C. As a result, the HLD flag of the relevant entry unit 550 is reset through the reset OR gate 553 of FIG. 5C. Consequently, the entry output gate 551 which corresponds to the entry unit 550 may select the memory access request of the entry again and the re-provision to the pipe provision control unit 520 of FIG. 5B through the pipe provision entry selection unit 552 is tested.

When the memory access request is registered from the pipeline control unit 103 to the request storage unit 1, for each entry unit 550, a comparison (match detection) circuit 554 detects a match of the PA address registered in each entry unit 550 and the pipe address 530 reported from the pipeline control unit 103. Each AND gate 555 outputs the detection result of each comparison (match detection) circuit 554 on the condition that the VAL flag of each entry unit 550 and the pipe address match detection instruction 531 provided from the pipeline control unit 103 are in an ON state. As a result, when any of the PA address of the valid entry unit 550 and the pipe address 530 are matched, the address match notice 558 output through the OR gate 556 enters an ON state. As mentioned earlier, when the address match notice 558 is reported from the request storage unit 1 in FIG. 5B, the abort OR gate 524 enters an ON state and the abort is set for the pipeline command generation unit 525. Thus, the generation of overlapping and idle main storage accesses is suppressed.

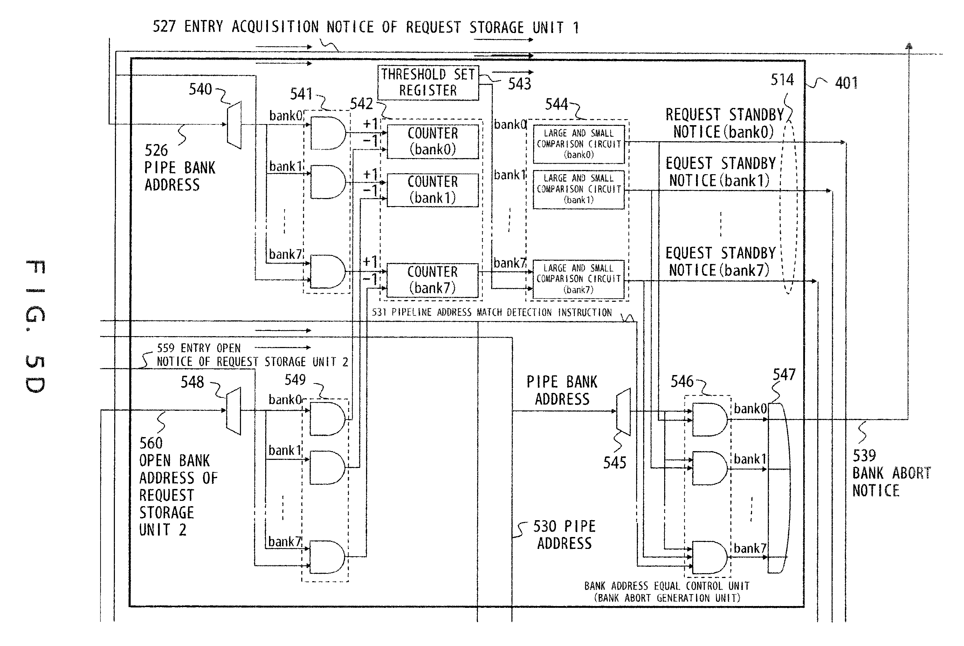

FIG. 5D illustrates a detailed circuit structure diagram of a bank address equal control unit (bank abort generation unit) 401 of FIG. 4A.

The bank abort generation unit 401 includes a bank address decoder 540, a count-up AND gate group 541, a counter group 542, a large and small comparison circuit group 544, a bank address decoder 548, and a count-down AND gate group 549. The bank abort generation unit 401 further includes a bank address decoder 545, a bank abort notice AND gate group 546, and a bank abort notice OR gate 547.

The counter group 542 counts for each bank consisting of BANK 0 to BANK 7 the number of memory access requests for the DIMM 110 of the main storage unit, according to the memory access request retained in the request storage unit 1 and the request storage unit 2.

In order to realize the counter, the count-up AND gate group 541 consists of 8 AND gates which correspond to 8 banks, for example, from BANK 0 to BANK 7. In each AND gate of the count-up AND gate group 541, a result of decoding with a bank address decoder 540 the pipe bank address 526 which is input from the pipeline command generation unit 525 of FIG. 5B is input. The decode unit 540, by decoding the pipe bank address 526, has a plurality of output lines in which any one output from among 8 outputs corresponding to BANK 0 to BANK 7 enters an ON state. Each of these output lines is input to each AND gate of the count-up AND gate group 541. When the pipe bank address 526 indicates BANK 0, only the BANK 0 enters an ON state from among the outputs of the bank address decoder 540 and the other banks, BANK 1 to BANK 7 enter an OFF state. When the pipe bank address 526 indicates BANK 1, only the BANK 1 enters an ON state from among the outputs of the bank address decoder 540 and the other outputs enter an OFF state. The same applies to BANK 2 to BANK 7. In each AND gate of the count-up AND gate group 541, an entry acquisition notice 527 of the request storage unit 1 which is input from the pipeline command generation unit 525 of FIG. 5B is input. As a result, the following control is executed at the timing at which the memory access request is registered in the request storage unit 1 and the request storage unit 2, the memory access request with the entry acquisition notice 527 of the request storage unit 1 having been issued from the pipeline command generation unit 525. The output of the AND gate in the count-up AND gate group 541 which corresponds to the bank indicated by the pipe bank address 526 corresponding to the above memory access request enters an ON state, and the counter in the counter group 542 which corresponds to the bank is increased.

On the other hand, at the timing at which the memory access request is read from the request storage unit 2 of FIG. 5C to the DIMM access control unit 109, an entry open notice 559 of the request storage unit 2 which indicates an opening of the request storage unit 2 is output from the request storage unit 2 of FIG. 5C. An open bank address 560 of the request storage unit 2 which indicates a bank of the read memory access request is further output from the request storage unit 2. The entry open notice 559 of the request storage unit 2 and the open bank address 560 of the request storage unit 2 are input to the bank abort generation unit 401 of FIG. 5D. The transfer of the above two pieces of data from the request storage unit 2 to the bank abort generation unit 401 is executed from the system controller side bus interface unit 112 of FIG. 4B through the CPU side bus interface unit 111 of FIG. 4A via a system bus. Here, a count-down AND gate group 549 consists of 8 gates corresponding to 8 banks for example from BANK 0 to BANK 7. In each AND gate of the count-down AND gate group 549, a result of decoding with a bank address decoder 548 the open bank address 560 of the request storage unit 2 which is input from the request storage unit 2 of FIG. 5C is input. That is to say, the bank address decoder 548, by decoding the open bank address 560 of the request storage unit 2, has a plurality of output lines in which any one output from among 8 outputs corresponding to BANK 0 to BANK 7 enters an ON state. Each of these output lines is input to each AND gate of the count-down AND gate group 549. When the open bank address 560 of the request storage unit 2 indicates BANK 0, only the BANK 0 enters an ON state from among the outputs of the bank address decoder 548 and the other banks, BANK 1 to BANK 7 enter an OFF state. The same applies to BANK 1 to BANK 7. In each AND gate of the count-down AND gate group 549, the entry open notice 559 of the request storage unit 2 is input from the request storage unit 2 of FIG. 5C. As a result, the following control is executed at the timing at which the main access request is read from the request storage unit 2 and the main storage is accessed. The output of the AND gate in the count-down AND gate group 549 which corresponds to the bank indicated by the open bank address 560 of the request storage unit 2 corresponding to the above memory access request enters an ON state, and the counter in the counter group 542 which corresponds to the bank is decreased.

In a manner as mentioned above, the counter group 542 may count for each bank the number of memory access requests currently in the course of commencement from the L2 cache control unit 101 of FIG. 4A to the DIMM 110 of FIG. 4B.

Next, each large and small comparison circuit of a large and small comparison circuit group 544 performs large and small comparisons for each counter value for each bank in the counter group 542 and for a threshold set in a threshold set register 543. A comparison result of each large and small comparison circuit is output as a request standby notice 514 for each bank, and is output to the bank standby control unit 402 of FIG. 5A. As mentioned earlier, the bank standby control unit 402 of FIG. 4A or FIG. 5A suppresses the output of the memory access request, making a request for the bank address which corresponds to the above request standby notice 514 from among the memory access requests which are in a delayed state at the entry unit 550 of the new request storage unit 102. As a result, providing the relevant memory access request to the pipeline of the L2 cache control unit 101 is suppressed until the count value of the memory access request corresponding to the relevant bank in the counter group 542 falls below the specified value.

The bank abort notice AND gate group 546 consists of 8 AND gates which correspond to 8 banks, for example, from BANK 0 to BANK 7. In each AND gate of the bank abort notice AND gate group 546, a result of decoding with a bank address decoder 545 the pipe bank address part of the pipe address 530 which is input from the pipeline command generation unit 525 of FIG. 5B is input. That is to say, the bank address decoder 545, by decoding the pipe bank address part of the pipe address 530, has a plurality of output lines in which any one output from among 8 outputs corresponding to BANK 0 to BANK 7 enters an ON state. Each of these output lines is input to each AND gate of the AND gate group 546. When the pipe bank address indicates BANK 0, only the BANK 0 enters an ON state from among the outputs of the bank address decoder 545 and the other banks, BANK 1 to BANK 7 enter an OFF state. The same applies to BANK 1 to BANK 7. In each AND gate of the bank abort notice AND gate group 546, the pipe address match detection instruction 531 which is input from the pipeline control unit 103 of FIG. 5B is input. Further, in each AND gate of the bank abort notice AND gate group 546, a comparison result output of each large and small comparison circuit of the large and small comparison circuit group 544 is input. As a result, when the pipe address 530 is input from the pipeline control unit 103, and when the count value of the memory access request which corresponds to the bank exceeds a predetermind value, the output of the relevant AND gate of the bank abort notice AND gate group 546 enters an ON state. With this, the bank abort notice 539 which is output from the bank abort notice OR gate 547 enters an ON state and the abort OR gate 524 in the pipeline control unit 103 of FIG. 5B enters an ON state. With this, the pipeline command generation unit 525 enters an abort state and outputs to the new request storage unit 102 a pipeline passback notice 528. As a result, the relevant entry unit 501 of the new request storage unit 102 is not opened but it enters a delayed state, and the execution of the relevant memory access request is delayed. With the control operation using the bank abort notice 539 from the above mentioned bank abort generation unit 401 together with the operation of the bank standby control unit 402 of FIG. 5A as mentioned above, excess issuance of the memory access requests of the same bank may be minimized. Further, the memory access requests of the banks which are less frequently issued compared with those of other banks may be issued to the DIMM 110 preferentially. With this, the issuance state of the memory access request may be naturally set to a state in which a wide variety of memory access requests of banks are steadily stored in the request storage unit 1 or 2 as illustrated in FIG. 3 (b), and equalization of bank accesses may be realized.

Further detailed explanation is given for equalization of the bank accesses taking the earlier mentioned FIG. 3 (b) as an example. Here, it is defined that the memory access requests of the same bank are consecutively issued from each CPU core unit 100 consisting of Core 0 to Core 3. In such a case, in the request storage unit 0 of FIG. 5A, the pipe provision entry selection unit 503 selects the memory access request from the entry unit 501 which corresponds to each CPU core unit 100 and provides it to the pipeline of the L2 cache memory. At this time, bank standby control units 401 and 402 of FIG. 4A control memory access requests so that a certain number or more of the memory access requests having the same bank address are not consecutively provided. For example, when a counting threshold of the counter which corresponds to each bank address of the counter group 542 of FIG. 5D is 1, the bank standby control units 401 and 402 control memory access requests so that two or more of the memory access requests having the same bank address are not consecutively provided to the pipeline. As a result, in the request storage unit 0, the entry unit 501 in which memory access requests having different bank addresses are stored is preferentially selected, and the memory access request is provided to the pipeline of the L2 cache. For example, a case is considered in which the requests for the same bank address are stored at substantially the same time in 4 entry units 501 which correspond to Core 0, Core 1, Core 2, and Core 3. In this case, first, the memory access request having the bank address = 0 of the entry unit 501 of Core 0 is selected and provided to the pipeline. Immediately after that, when the memory access requests having the same bank address = 0 are stored in each entry unit 501 of Core 1, Core 2, and Core 3, output therefrom is all suppressed. Then, as indicated in FIG. 3 (b), in the entry unit 501 of Core 0, immediately after the memory access request having the bank address = 0 is output to the DIMM 110, the subsequent memory access request having bank address = 4 is output from the CPU core unit 100 of Core 1 to the DIMM 110. That is to say, the entry unit 501 which is selected subsequent to the entry 501 of Core 0 in which the memory access request having bank address = 0 is stored means to be the entry unit 501 of Core 1 in which the memory access request having bank address = 4 is stored. Thus, the memory access request having bank address = 4 is output immediately after the memory access request having bank address = 0 is output, and the access control of the bank may be equalized and at the same time, the pipeline of the L2 cache may pursue processing substantially continuously. Therefore, according to embodiments of the present invention, BANK 0, BANK 4, BANK 2, BANK 6, BANK 1, BANK 5, BANK 3, and BANK 7 are equally accessed and Core 0, Core 1, Core 2, and Core 3 are equally accessed, as indicated in FIG. 3 (b). Further, the CPU core unit 100 may access the DIMM 110 continuously, as indicated in 304 of FIG. 3 (b).

Conventionally, many memory access requests having the same bank address that are not consecutively processable remain in the pipeline of the L2 cache and the issuance of the memory access request to the main storage unit and the data response corresponding thereto become intermittent, leading to a result wherein the processing performance of the pipeline seriously declines. On the other hand, in the embodiments of the present invention, since the pipeline of the L2 cache line may pursue processing substantially continuously, throughput of the L2 cache control unit 101 may be improved.

Here, the memory access request of Core 1, Core 2, and Core 3 is delayed until the output of the bank address = 0 becomes available. However, after a lapse of a time period during which the output of the bank address = 0 is available, control may be performed in such a manner that after the subsequent bank address of Core 1 is preferentially selected, the memory access request of the Core 1 is selected consecutively. With such an algorithm being included in the pipe provision entry selection unit 552 of FIG. 5A, processing is not biased to a certain CPU core unit 100.

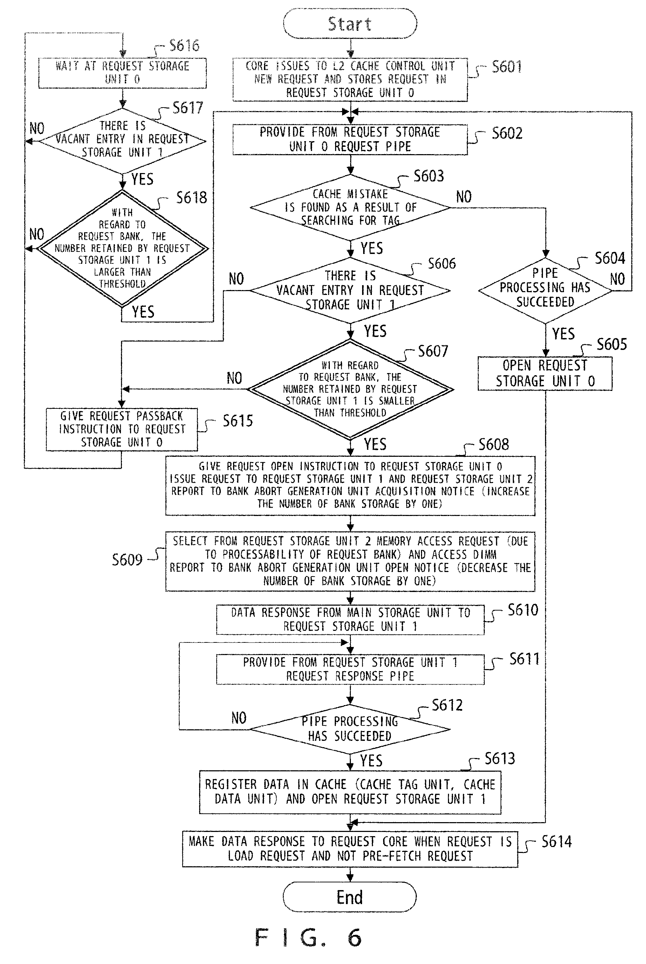

FIG. 6 illustrates a flowchart which illustrates a process of a first embodiment mentioned above.

The CPU core 1602 issues a new memory access request to the L2 cache control unit 101, and as a result, the memory acces request is stored in the entry unit 501 (see FIG. 5A) of the request storage unit 0 (new request storage unit 102; the same applies hereafter) (step S 601).

After that, in FIG. 5A, the request pipe is provided from the entry unit 501 of the request storage unit 0 through the entry output gate 551 and the pipe provision entry selection unit 552 to the pipe provision control unit 520 of FIG. 5B (step S 602).

In the tag readout control unit 521 (see FIG. 5B) of the pipeline control unit 103, as a result of the cache tag unit 105 being searched for, it is determined whether or not a cache mistake has occurred (step S 603).

When a cache hit is performed and the determination in step S 603 is NO, in the pipeline command generation unit 525 of FIG. 5B, it is determined whether or not pipe processing of the request pipe has succeeded (step S 604).

When pipe processing succeeds and the determination in step S 604 is YES, a pipeline processing success notice (entry open notice) 529 is reported to the request storage unit 0 of FIG. 5A from the pipeline command generation unit 525 of FIG. 5B. As a result, in the relevant entry unit 501 of the request storage unit 0, the VAL flag, the HLD flag, and the WAIT flag are reset and the entry unit 501 is opened (step S 605).

When pipe processing does not succeed and the determination in step S 604 is NO, a pipeline passback notice 528 is reported to the request storage unit 0 of FIG. 5A from the pipeline command generation unit 525 of FIG. 5B. As a result, in the relevant entry unit 501, the HLD flag is reset and the WAIT flag is set, and the memory access request of the entry unit 501 enters a delayed state. With this, the provision of the request pipe from the request storage unit 0 to the pipeline control unit 103 is repeatedly tested (step S 604 →step S 602).

When a cache mistake is performed in the pipeline control unit 103 and the determination in step S 603 is YES, it is determined whether or not there is a vacant entry in the request storage unit 1 (step S 606). The determination function is realized by the resource counter 523 of the request storage unit 1 and the abort OR gate 524. That is to say, when the count value of the resource counter 523 of the request storage unit 1 enters a FULL state and the resource counter value 515 of the request storage unit 1 indicates 1, it is determined that there is no vacant entry in the request storage unit 1. When the resource counter value 515 of the request storage unit 1 indicates 0, it is determined that there are vacant entries in the request storage unit 1.

When there are vacant entries in the request storage unit 1 and the determination in step S 606 is YES, it is determined whether or not the number of memory access requests retained by the request storage unit 1 is smaller than a specified threshold (step S 607). Specifically, in the large and small comparison circuit which corresponds to the request bank of the large and small comparison circuit group 544 of the bank abort generation unit 401 of FIG. 5D, it is determined whether or not the counter value which corresponds to the request bank of the counter group 542 is smaller than a specified threshold stored in the threshold set register 543.

When the determination in step S 607 is YES, the bank abort notice 539 is not issued from the bank abort generation unit 401 of FIG. 5D to the abort OR gate 524 of FIG. 5B. As a result, the pipeline processing success notice (entry open notice) 529 is reported as a request open instruction from the pipeline command generation unit 525 of FIG. 5B to the request storage unit 0 of FIG. 5A. With this, in the relevant entry unit 501 of the request storage unit 0 of FIG. 5, the VAL flag, the HLD flag, and the WAIT flag are reset and the entry unit 501 is opened. Further, together with the memory access request, the entry acquisition notice 527 of the request storage unit 1 is issued from the pipeline command generation unit 525 of FIG. 5B to the entry unit 550 of the request storage unit 1 and the request storage unit 2 of FIG. 5C. The above notice from the pipeline command generation unit 525 to the request storage unit 2 is executed from the system controller side bus interface unit 112 of FIG. 4B through the CPU side bus interface unit 111 of FIG. 4A via a system bus. As a result, the memory access request is issued from the pipeline control unit 103 to the request storage unit 1 and the request storage unit 2. In addition, with the entry acquisition notice 527 of the request storage unit 1, in the bank abort generation unit 401 of FIG. 5D, the count value (the number of bank storages) of the counter of the request bank in the counter group 542 is increased by one (incremented). The function is realised by the bank address decoder 540 and the count-up AND gate group 541 of FIG. 5D (so far, step S 608).

Next, since the bank abort notice 539 has not been output from the bank abort generation unit 401 of FIG. 5D at the point of issuing the memory access request to the request storage unit 1 and the request storage unit 2, the request bank is in a processable state. Therefore, the DIMM access control unit 109 may select the memory access request from the request storage unit 2, and the access to the DIMM 110 is executed. At the same time, the entry open notice 559 of the request storage unit 2 is reported from the request storage unit 2 of FIG. 5C to the bank abort generation unit 401 of FIG. 5D. As a result, in the bank abort generation unit 401 of FIG. 5D, the count value (the number of bank storages) of the counter of the request bank in the counter group 542 is decreased by one (decremented). The function is realized by the bank address decoder 548 and the count-down AND gate group 549 of FIG. 5D (so far, step S 609).

As a result of the above DIMM 110 being accessed, the main storage data response 561 is transferred from the DIMM 110, which is the main storage unit, to the data buffer 557 of the request storage unit 1 (step S 610).

Next, upon the transfer of the main storage data response 561, the request response pipe is provided from the request storage unit 1 (step S 611). The function is realized as an operation in which the entry is selected by the pipe provision entry selection unit 552 after the RDY flag is set in the relevant entry unit 550 of the request storage unit 1 of FIG. 5C and the relevant entry output gate 551 enters an ON state.

As a result, in the pipeline command generation unit 525 of FIG. 5B, it is determined whether or not pipe processing has succeeded (step S 612).

When pipe processing does not succeed and the determination in step S 612 is NO, a pipeline passback notice 528 is reported from the pipeline control unit 103 to the request storage unit 1. As a result, in the relevant entry unit 550 of the request storage unit 1 of FIG. 5C, the HLD flag is reset, and with this, the relevant entry output gate 551 enters an ON state. Consequently, the pipe provision entry selection unit 552 of the request storage unit 1 repeatedly executes the provision of the memory access request of the relevant entry unit 550 to the request response pipe (step S 612 step S 611).

When pipe processing succeeds and the determination in step S 612 is YES, the pipeline control unit 103 registers data in the cache (cache tag unit 105 and cache data unit 106). After that, the pipeline processing success notice (entry open notice) 529 is issued from the pipeline control unit 103 to the request storage unit 1. As a result, in the relevant entry unit 550 of the request storage unit 1 of FIG. 5C, the VAL flag, the RDY flag, and the HLD flag are reset and the entry unit 550 is opened (step S 613).

The CPU data response 563 is transferred from the data buffer 557 in the request storage unit 1 of FIG. 5C to the CPU core 1602 (request core) of FIG. 5A which made the memory access request (step S 614), when the memory access request from the CPU core 1602 is a load request and is not a pre-fetch request. In the above mentioned manner, processing for one memory access request is completed.

When the determination of the earlier mentioned step S 606 or S 607 is NO, the following operation processing is executed. A case in which the determination of step S 606 is NO is a case in which the count value of the resource counter 523 of the request storage unit 1 of FIG. 5B enters a FULL state and the resource counter value 515 of the request storage unit 1 indicates 1 and in which it is determined that there is no vacant entry in the request storage unit 1. A case in which the determination of step S 607 is NO is as follows. That is to say, it is a case in which it is determined that the counter value which corresponds to the request bank of the counter group 542 is not smaller than a specified threshold stored in the threshold set register 543 in the large and small comparison circuit which corresponds to the requests bank of the large and small comparison circuit group 544 of the bank abort generation unit 401 of FIG. 5D.

First, the pipeline passback notice 528 is reported from the pipeline control unit 103 to the request storage unit 0 (step S 615). As a result, in the request storage unit 0 of FIG. 5A, the WAIT flag of the relevant entry unit 501 is set, and the memory access request of the entry unit 501 enters a delayed state (step S 616).

Next, in the delayed state, it is determined whether or not vacant entries are generated in the request storage unit 1 as the count value of the resource counter 523 of the request storage unit 1 of FIG. 5B does not enter a FULL state and the resource counter value 515 of the request storage unit 1 indicates 0 (step S 617). The function is realized by the AND gate 513 of FIG. 5A.

In the above delayed state, when no vacant entry is generated in the request storage unit 1 and the determination of step S 617 is NO, the delayed state in step S 616 is repeated (step S 617 →step S 616). In this case, in FIG. 5A, since the resource counter value 515 of the request storage unit 1 indicates 1 and the WAIT flag of the relevant entry unit 501 also indicates 1, the output of the AND gate 513 enters an ON state and the output of the OR gate 512 enters an ON state. As a result, the entry output gate 502 enters an OFF state, and the output of the memory access request from the relevant entry unit 501 is suppressed, and the delayed state is maintained.

In the above delayed state, when vacant entries are generated in the request storage unit 1 and the determination of step S 617 is YES, it is determined, with regard to the request bank, whether or not the number of memory access requests retained in the request storage unit 1 has become smaller than a specified threshold (step S 618). Specifically, in FIG. 5A, first, the output of the AND gate 513 enters an OFF state as the resource counter value 515 of the request storage unit 1 becomes 0. As a result, the function of the AND gate group 511 becomes valid. In the AND gate which corresponds to each bank of the AND gate group 511, the request standby notice 514 which corresponds to each bank is input from each large and small comparison circuit of the large and small comparison circuit group 544 of FIG. 5D. When the corresponding counter value of the counter group 542 becomes not smaller than a specified threshold which is stored in the threshold set register 543 in each large and small comparison circuit of the large and small comparison circuit group 544 of the bank abort generation unit 401 of FIG.5D, the request standby notice 514 which is output from the large and small comparison circuit enters an ON state. In addition, each AND gate group 511 is implemented and corresponds to each entry unit 501, and in accordance with the result of decoding with the bank address decoder 510 the bank address portion of the PA address which is registered in each entry unit 501, in the AND gate group 511, only the AND gate which corresponds to the bank address of the PA address of the entry unit 501 enters an ON state. Consequently, in the AND gate in the AND gate group 511 which corresponds to the request bank of the entry unit 501 as an object of the current processing, it is determined whether the request standby notice 514 which is input thereto is in an ON state or an OFF state. With this, with regard to the request bank, it is determined whether or not the number of memory access requests retained in the request storage unit 1 has become smaller than a specified threshold.

When the number retained in the request storage unit 1 which is stored in the threshold set register 543 has not become smaller than a specified threshold and the determination of step S 618 is NO, the delayed state of step S 616, the determination of step S 617, and the determination of step S 618 are repeated. Specifically, in the AND gate in the AND gate group 511 which corresponds to the request bank of the entry unit 501 as an object of the current processing, when the request standby notice 514 which is input thereto enters an ON state, the AND gate enters an ON state, and the output of the OR gate 512 enters an ON state. As a result, the entry output gate 502 which corresponds to the relevant entry unit 501 enters an OFF state, the output of the memory access request of the entry unit 501 is suppressed, and the delayed state is maintained.

When the number retained in the request storage unit 1 which is stored in the threshold set register 543 has become smaller than a specified threshold and the determination of step S 618 is YES, the step is moved onto the processing of step S 602. With this, the request pipe is provided from the request storage unit 0 to the pipeline control unit 103, and an L2 cache control is executed (step S 618 →step S 602). Specifically, in the AND gate in the AND gate group 511 which corresponds to the request bank of the entry unit 501 as an object of the current processing, when the request standby notice 514 which is input thereto enters an OFF state, the AND gate enters an OFF state. Further, all the other AND gates and the AND gate 513 in the AND gate group 511 enter an OFF state. As a result, the output of the OR gate 512 enters an OFF state, the entry output gate 502 which corresponds to the relevant entry unit 501 enters an ON state and a state in which the memory access request of the entry unit 501 may be output. With this, an L2 cache control is executed as the pipe provision entry selection unit 552 selects the memory access request of the relevant entry unit 501 and provides the memory access request to the pipe provision control unit 520 of FIG. 5B.

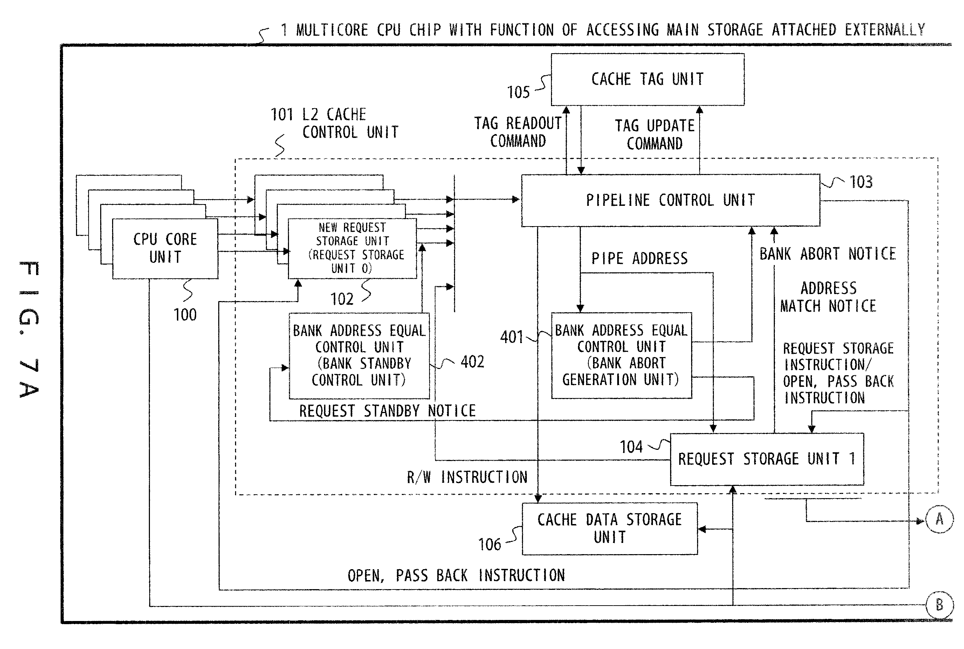

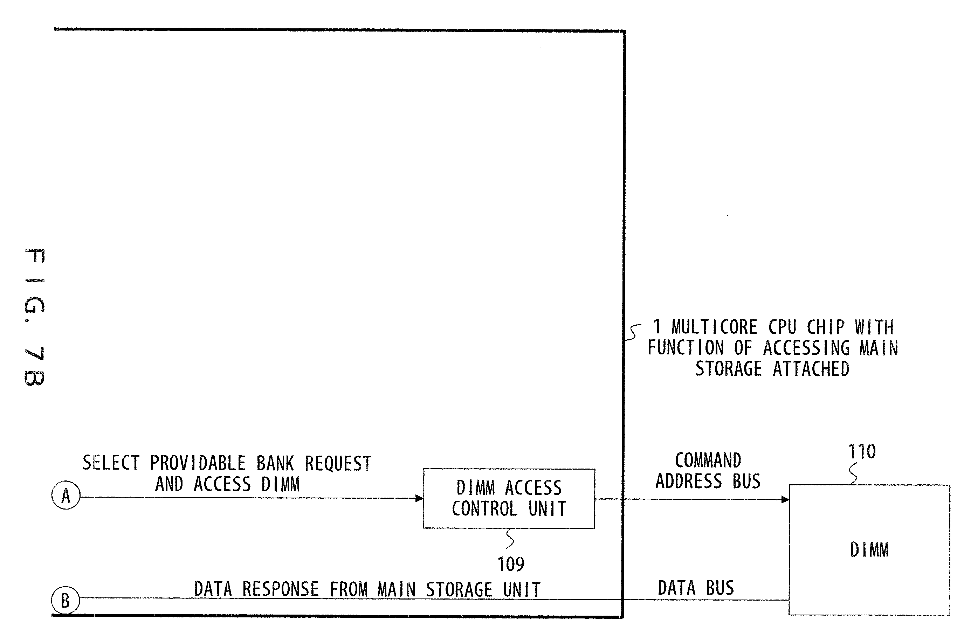

FIG. 7A and FIG. 7B illustrate a configuration diagram of a second embodiment in which a part which accesses a main storage is implemented as one chip in a multicore CPU chip 1 with a function of accessing a main storage attached externally, the diagram of FIG. 7A and FIG. 7B being configured according to the configuration of a first embodiment of FIG. 4A and FIG. 4B.

In this configuration, the CPU side bus interface unit 111 of FIG. 4A and the system controller side bus interface unit 112 of FIG. 4B are omitted, and further, the function of the request storage unit 2 of FIG. 4B is also omitted and is integrated into the request storage unit 1. The control is the same as that of FIGs. 4A and 4B, except that the request storage unit 1 has the function of the request storage unit 2 and that communication control between the request storage unit 1 and the request storage unit 2 is omitted. A detailed circuit structure diagram of the new request storage unit 102, the bank standby control unit 402, the pipeline control unit 103, the request storage unit 1, and the bank abort generation unit 401 of FIG. 7A are similar to the circuit structure diagram of FIG. 5A, FIG. 5B, FIG. 5C, and FIG. 5D of the first embodiment.

In the second embodiment, information which corresponds to the entry open notice 559 of the request storage unit 2 and the open bank address 560 of the request storage unit 2 of the first embodiment is output from the request storage unit 1 to the bank abort generation unit 401 of FIG. 7A and FIG. 5D.

The information is output at the time when the DIMM access control unit 109 of FIG. 7B reads the memory access request from the request storage unit 1 of FIG. 7A and executes access to the DIMM 110.

With the first and second embodiments explained so far above, the request bank to the main storage is equalized, and even when a deviation of a bank is about to occur, issuance of excessive memory access requests in the same bank may be minimized. Further, the memory access requests of the banks which are less frequently issued compared with those of other banks may be issued to the main storage unit preferentially. The functions are realized by the bank address equal control units 401 and 402 of FIG. 4A and FIG. 7A which consist of the bank abort generation unit 401 of FIG. 5D and the bank standby control unit 402 of FIG. 5A. With this, the issuance state of the memory access request may be naturally set to a high performance state in which a wide variety of memory access requests of banks are steadily stored in the request storage unit 1 or 2 as illustrated in FIG. 3 (b), and equalization of bank accesses may be realized. Once the issuance state of the memory access request is settled in a high performance state, stream accesses and the like are equally processed, with a deviated state of the bank phase being maintained between the CPU core units 100.

In the above explanations for each embodiment, the explanations have been given mainly for fetch access operations to the main storage unit. In a cache control which introduces a write-back control, a store request to the main storage unit occurs when a store occurs in software and a rewritten block is replaced by a new request. In other words, when a fetch request is stored in the request storage unit 1, replacement processing is performed to a cache index and a cache way that are secured by the fetch request. The bank of the block to be replaced is the same bank as that of the request of the request storage unit 1. That is to say, since equalization of the bank to the store request is surely realized at the same time when the equalization of the bank to the fetch request of the main storage unit is realized, it is not necessary to expressly introduce the equalization processing of the bank for the store request. In other words, with the configuration of each embodiment mentioned above, equalization processing of the bank with a sufficient performance may be realized.

## Claims

1. An arithmetic processing unit (1,107) connected to a storage device (110) having a plurality of banks, the arithmetic processing unit comprising:
a command processing unit (100) configured to issue a memory access request;
a cache memory (105,106) configured to have a plurality of cache lines for retaining data;
a first request retention unit (102) configured to provide a memory access request issued by the command processing unit;
a second request retention unit (104) configured to retain a memory access request that has a cache mistake that has occurred;
a cache control unit (103) configured to search for the cache memory according to the memory access request provided from the first request retention unit and to retain the memory access request that has a cache mistake that has occurred in the second request retention unit;
a third request retention unit (108) configured to retain a memory access request with processing uninterrupted from among the memory access requests retained in the second request retention unit;
an access count unit (401) configured to count, for each bank, the number of memory access requests to the storage device according to the memory access request retained in the second request retention unit and the third request retention unit, and when any of the number of counted memory access requests exceeds a specified value, to instruct the cache control unit to interrupt processing of the memory access request to the bank in which the number of memory access requests has exceeded the pretermined value retained in the first request retention unit; and
a main memory control unit (107) configured to issue the memory access request retained in the third request retention unit to the storage device.

2. The arithmetic processing unit (1, 107) according to claim 1,
wherein the access count unit (401) further outputs to the first request retention unit a standby notice of a memory access request to a bank in which the counted number of memory access requests exceeds a specified value, and
wherein the first request retention unit (102) suppresses a provision to the cache control unit of a memory access request to a corresponding bank, according to a standby notice of the memory access request which is output by the access count unit.

3. The arithmetic processing unit (1, 107) according to claim 1,
wherein the access count unit (401) increments a count value of a bank which corresponds to the memory access request, when the cache control unit retains the memory access request in the second request retention unit, and
decrements a count value of a bank which corresponds to the memory access request, when the main memory control unit issues the memory access request retained in the third request retention unit.

4. An arithmetic processing unit (1, 107) connected to a main storage device having a plurality of banks, the arithmetic processing unit comprising:
a command processing unit (100) configured to issue a memory access request;
a cache memory (105, 106) configured to have a plurality of cache lines for retaining data;
a first request retention unit (102) configured to provide a memory access request issued by the command processing unit;
a second request retention unit (104) configured to retain a memory access request that has a cache mistake that has occurred;
a cache control unit (103) configured to search for the cache memory according to the memory access request provided from the first request retention unit and to retain in the second request retention unit the memory access request that has a cache mistake that has occurred;
an access count unit (401) configured to count, for each bank, the number of memory access requests to the main storage device according to the memory access request retained in the second request retention unit, and when any of the number of counted memory access requests exceeds a specified value, to instruct the cache control unit to interrupt processing of the memory access request retained in the first request retention unit; and
a main memory control unit (107) configured to issue the memory access request retained in the second request retention unit to the main storage device.

5. The arithmetic processing (1,107) unit according to claim 4,
wherein the access count unit (401) further outputs to the first request retention unit a standby notice of a memory access request to a bank in which the counted number of memory access requests exceeds a specified value, and
wherein the first request retention unit suppresses a provision to the cache control unit of a memory access request to a corresponding bank, according to the standby notice of the memory access request which is output by the access count unit.

6. The arithmetic processing (1, 107) unit according to claim 4,
wherein the access count unit (401) increases a count value of a bank which corresponds to the memory access request by one, when the cache control unit retains the memory access request in the second request retention unit, and
decrements a count value of a bank which corresponds to the memory access request, when the main memory control unit issues the memory access request retained in the second request retention unit to the main storage unit.

7. An information processing device (1,107,110) comprising a main storage device (110) having a plurality of banks and an arithmetic processing unit (1,107) connected to the main storage device, wherein
the arithmetic processing unit (1,107) includes:
a command processing unit (100) configured to issue a memory access request;
a cache memory (105, 106) configured to have a plurality of cache lines for retaining data;
a first request retention unit (102) configured to provide a memory access request issued by the command processing unit;
a second request retention unit (104) configured to retain a memory access request that has a cache mistake that has occurred;
a cache control unit (103) configured to search for the cache memory according to the memory access request provided from the first request retention unit and to retain the memory access request that has a cache mistake that has occurred in the second request retention unit;
a third request retention unit (108) configured to retain a memory access request with processing uninterrupted from among the memory access requests retained in the second request retention unit;
an access count unit (401) configured to count, for each bank, the number of memory access requests to the main storage device according to the memory access request retained in the second request retention unit and the third request retention unit, and when any of the number of counted memory access requests of banks exceeds a specified value, to instruct the cache control unit to interrupt processing of the memory access request retained in the first request retention unit; and
a main memory control unit (107) configured to issue the memory access request retained in the third request retention unit to the main storage device.

8. An information processing device (1, 107, 110) comprising a main storage device (110) having a plurality of banks and an arithmetic processing unit (1,107) connected to the main storage device, wherein
the arithmetic processing unit (1,107) includes:
a command processing unit (100) configured to issue a memory access request;
a cache memory (105,106) configured to have a plurality of cache lines for retaining data;
a first request retention unit (102) configured to provide a memory access request issued by the command processing unit;
a second request retention unit (104) configured to retain a memory access request that has a cache mistake that has occurred;
a cache control unit (103) configured to search for the cache memory according to the memory access request provided from the first request retention unit and to retain in the second request retention unit the memory access request that has a cache mistake that has occurred;
an access count unit (401) configured to count, for each bank, the number of memory access requests to the main storage device according to the memory access request retained in the second request retention unit, and when any of the number of counted memory access requests exceeds a specified value, to instruct the cache control unit to interrupt processing of the memory access request retained, in the first request retention unit; and
a main memory control unit (107) configured to issue the memory access request retained in the second request retention unit to the main storage device.

9. A control method of an arithmetic processing unit (1, 107) being connected to a main storage device (110) having a plurality of banks and comprising a cache memory (105, 106) having a plurality of cache lines for retaining data, wherein
a command processing unit included in the arithmetic processing unit is configured to issue a memory access request;
a cache control unit included in the arithmetic processing unit is configured to retain the memory access request issued by the command processing unit in a first request retention unit included in the arithmetic processing unit;
the cache control unit is configured to search for the cache memory according to the memory access request provided from the first request retention unit;
the cache control unit is configured to retain in a second request retention unit included in the arithmetic processing unit the memory access request that has a cache mistake that has occurred;
the cache control unit is configured to retain in a third request retention unit included in the arithmetic processing unit the memory access retained in the second request retention unit;
an access count unit included in the arithmetic processing unit is configured to count, for each bank, the number of memory access requests to the main storage device according to the memory access request retained in the second request retention unit and the third request retention unit, and when any of the number of counted memory access requests exceeds a specified value, to instruct the cache control unit to interrupt processing of the memory access request retained in the first request retention unit; and
the cache control unit is configured to issue the memory access request retained in the third request retention unit to the main storage unit.

10. The control method of an arithmetic processing unit according to claim 9,
wherein the access count unit outputs to the first request retention unit a standby notice of a memory access request to a bank in which the counted number of memory access requests exceeds a specified value, and
wherein the first request retention unit suppresses a provision to the cache control unit of a memory access request to a corresponding bank, according to a standby notice of the memory access request which is output by the access count unit.

11. The control method of an arithmetic processing unit according to claim 9,
wherein the access count unit increases a count value of a bank which corresponds to the memory access request, when the cache control unit retains the memory access request in the second request retention unit, and
decrements a count value of a bank which corresponds to the memory access request, when the main memory control unit issues the memory access request retained in the third request retention unit to the main storage unit.

12. A control method of an information processing device comprising a main storage device having a plurality of banks and an arithmetic processing unit connected to the main storage device, wherein
a command processing unit included in the arithmetic processing unit is configured to issue a memory access request;
a cache control unit included in the arithmetic processing unit is configured to retain in a first request retention unit included in the arithmetic processing unit the memory access request issued by the command processing unit;
the cache control unit is configured to search for the cache memory according to the memory access request provided from the first request retention unit;
the cache control unit is configured to retain in a second request retention unit included in the arithmetic processing unit the memory access that has a cache mistake that has occurred;
an access count unit included in the arithmetic processing unit is configured to count, for each bank, the number of memory access requests to the main storage device according to the memory access request retained in the second request retention unit and the third request retention unit, and when any of the number of counted memory access requests exceeds a specified value, to instruct the cache control unit to interrupt processing of the memory access request retained in the first request retention unit;
the cache control unit is configured to interrupt the memory access request retained in the first request retention unit, according to the access interruption instruction; and
the cache control unit is configured to issue the memory access request retained in the second request retention unit to the main storage unit.
